# EUROPEAN PATENT APPLICATION

(11) **EP 4 648 193 A1**
(43) Date of publication of application: **12.11.2025**
(21) Application number: 23914083.3
(22) Date of filing: 06.01.2023
(51) Int. Cl.: H01M 50/244, H01M 50/204

(54) **BATTERY AND ELECTRICAL DEVICE**

(71) Applicant: Contemporary Amperex Technology (Hong Kong) Limited, Central, Hong Kong (HK)
(72) Inventor: WANG, Liangyi, Ningde, Fujian 352100 (CN); WANG, Zhi, Ningde, Fujian 352100 (CN); CHEN, Liangmei, Ningde, Fujian 352100 (CN); QIN, Feng, Ningde, Fujian 352100 (CN)
(74) Representative: Gong, Jinping
(86) International application number: PCT/CN2023/071058
(87) International publication number: WO 2024/145926

(57) **Abstract**

A battery (100) and a power consuming device (200) are provided. The battery (100) includes: a load-bearing bracket (10) and a plurality of battery modules (20). The plurality of battery modules (20) are mounted to the load-bearing bracket (10). At least one battery module (20) is detachably mounted to the load-bearing bracket (10).

## Description

### TECHNICAL FIELD

This application relates to the field of battery technologies, and specifically, to a battery and a power consuming device.

### BACKGROUND

In the related art, a battery is usually made into a form of a large battery pack. All battery cells are divided into a plurality of modules and are all stacked in a large battery case. The battery case is entirely sealed. Consequently, all the battery cells are accommodated in a sealed space defined by the battery case. Maintenance for the battery may be performed by opening the entire battery case. Consequently, it is difficult to maintain the battery. In addition, when the battery is faulty, the entire battery usually needs to be replaced, resulting in high costs.

### SUMMARY

Embodiments of this application provide a battery and a power consuming device, so as to reduce maintenance difficulty and maintenance costs of the battery.

According to a first aspect, an embodiment of this application provides a battery, including: a load-bearing bracket; and a plurality of battery modules, where the plurality of battery modules are mounted to the load-bearing bracket, and at least one battery module is detachably mounted to the load-bearing bracket.

In the foregoing technical solution, the battery includes the plurality of battery modules and the load-bearing bracket for mounting the plurality of battery modules. The entire battery may have a high battery level. During battery maintenance, because the entire battery does not have an entire external case, an operation of opening the case is omitted, and the maintenance difficulty of the battery is reduced. In addition, the at least one battery module is detachably mounted to the load-bearing bracket, so as to facilitate maintenance and replacement of the battery module. When the battery is faulty, only a faulty battery module needs to be repaired or replaced, thereby reducing maintenance costs of the battery.

In some embodiments, the battery module includes a shell and at least one battery cell. The battery cell is disposed in the shell. The shell is detachably connected to the load-bearing bracket.

In the foregoing technical solution, the battery module may be sealed by the shell thereof. The shell of the battery module is detachably connected to the load-bearing bracket, thereby conveniently implementing a detachable connection between the battery module and the load-bearing bracket. In addition, compared with a manner of fastening the battery module through compressing, the detachable connection between the shell of the battery module and the load-bearing bracket enables the battery module to be mounted and fastened to the load-bearing bracket more reliably, and a problem of extrusion damage to the battery module caused by using the manner of fastening through compressing may be avoided.

In some embodiments, the shell includes a bottom plate and a case. The case is connected to an upper side of the bottom plate and defines, with the bottom plate, an accommodating cavity for accommodating the battery cell. The bottom plate is supported by the load-bearing bracket and is detachably connected to the load-bearing bracket.

In the foregoing technical solution, the battery module is supported by the bottom plate thereof and is connected to the load-bearing bracket. The battery module may be stably supported by the load-bearing bracket, and the battery module may be more reliably fastened to the load-bearing bracket.

In some embodiments, a projection of the case in a horizontal plane is a first projection, and a projection of the bottom plate in the horizontal plane is a second projection. The first projection is located within the second projection.

In the foregoing technical solution, with a large bottom plate, a support area of the load-bearing bracket for the battery module may be enlarged, thereby further improving stability of supporting the battery module by the load-bearing bracket.

In some embodiments, a fastener is penetrated between the bottom plate and the load-bearing bracket, to mount the battery module to the load-bearing bracket.

In the foregoing technical solution, the fastener is penetrated between the bottom plate and the load-bearing bracket, so as to implement a detachable connection between the battery module and the load-bearing bracket. In addition, a connection manner by using the fastener implements the detachable connection between the battery module and the load-bearing bracket, so as to ensure mounting stability and reliability of the battery module, and further facilitating disassembling of the battery module.

In some embodiments, a lower edge of the case is formed with a connection flange. The connection flange is detachably connected to the bottom plate.

In the foregoing technical solution, the connection flange is disposed at the lower edge of the case, thereby facilitating connection and fastening between the case and the bottom plate. In addition, the connection flange is detachably connected to the bottom plate, thereby implementing opening of the battery module, to facilitate maintenance for the battery cell in the battery module.

In some embodiments, the battery includes: a distribution box, where the distribution box is disposed on the load-bearing bracket, and at least a part of the battery modules are detachably connected to the distribution box through a connection wiring harness.

In the foregoing technical solution, a detachable connection between the at least the part of the battery modules and the distribution box is implemented through the connection wiring harness. Not only a mechanical connection structure of the battery module may be disassembled, but also an electrical connection structure of the battery module may be disassembled, thereby implementing smooth disassembling of the entire battery module.

In some embodiments, the at least the part of the battery modules have a first interface. The distribution box has a second interface. Two ends of the connection wiring harness are respectively connected to the first interface and the second interface. The connection wiring harness is detachably connected to at least one of the first interface and the second interface.

In the foregoing technical solution, a manner of providing interfaces between the battery modules and the distribution box further facilitates connection and separation between the battery modules and the distribution box.

In some embodiments, the distribution box has a plurality of second interfaces. All the second interfaces are located on a same side of the distribution box.

In the foregoing technical solution, the plurality of second interfaces on the distribution box are disposed on the same side of the distribution box. A plurality of connection wiring harnesses connecting a plurality of battery modules may be conveniently connected to the same side of the distribution box, thereby facilitating disassembling of the connection wiring harnesses and also facilitating maintenance.

In some embodiments, the plurality of battery modules include a first battery module and a second battery module, and a quantity of the first battery module is at least one and a quantity of the second battery module is one. The first battery module is detachably connected to the distribution box through the connection wiring harness. The distribution box and the second battery module are integrated.

In the foregoing technical solution, the distribution box and one of the battery modules are integrated, thereby realizing a compact structure, reducing the occupied space, and improving the overall energy density of the battery.

In some embodiments, the battery module includes a shell and a battery cell disposed in the shell. The shell of the first battery module is provided with a first interface. The distribution box includes a box and an electrical assembly disposed in the box. The shell of the second battery module forms the box and is provided with a second interface. The electrical assembly is electrically connected to the second interface. Two ends of the connection wiring harness are respectively connected to the first interface and the second interface. The connection wiring harness is detachably connected to at least one of the first interface and the second interface. The battery cell of the second battery module is electrically connected to the electrical assembly.

In the foregoing technical solution, the second battery module and the distribution box are integrated, thereby realizing a compact structure, reducing the occupied space, and improving the overall energy density of the battery. The distribution box shares the shell of the second battery module, thereby sealing the distribution box, avoiding separately providing a box for the distribution box, and reducing the quantity of parts. In addition, the structure may further be compact, and the occupied space may be further reduced. In addition, the battery cell in the second battery module may be electrically connected to an electrical assembly of the distribution box in the shell of the second battery module, so that an interface for connecting the distribution box may be omitted from the outside of the second battery module.

In some embodiments, the battery includes: a heat management system, where the heat management system includes a plurality of heat management components, the battery module includes a shell and a battery cell disposed in the shell, and the heat management component is disposed on the shell or in the shell to regulate a temperature of the battery cell.

In the foregoing technical solution, the heat management system including the plurality of heat management components is disposed. A temperature of each battery module may be regulated. In addition, the heat management component is disposed in the shell of the battery module, so that the battery module has an independent heat management component, thereby improving efficiency of temperature regulation of the battery cell of the battery module by using the heat management component, and facilitating maintenance for the battery module.

In some embodiments, the heat management component has a heat exchange channel through which a heat exchange medium flows. The plurality of heat management components are connected in series, in parallel, or in a series-parallel mixed manner. The heat management system further includes a heat management joint. The heat management joint is disposed on the load-bearing bracket and is located outside the battery module. The heat management component is detachably connected to the heat management joint and/or the heat management components are detachably connected to each other.

In the foregoing technical solution, the plurality of heat management components share one heat management joint, and the heat exchange medium may flow into the plurality of heat management components or flow out of the plurality of heat management components through the shared heat management joint. It is convenient for the heat management system to be connected to another component through the shared heat management joint, to implement a circulation flow of the heat exchange medium, thereby reducing a quantity of heat management joints, and facilitating connection or separation of the heat management system to/from another component.

In some embodiments, the heat management joint is close to an outer edge of the load-bearing bracket.

In the foregoing technical solution, the heat management joint is close to the outer edge of the load-bearing bracket, thereby facilitating an operation of connecting or separating the heat management system of the battery to/from another component.

In some embodiments, the heat management component is integrated to the shell.

In the foregoing technical solution, the heat management component is integrated to the shell, thereby realizing a compact structure of the battery module, reducing the occupied space, and improving the energy density of a single battery module.

In some embodiments, the shell includes a bottom plate and a case. The case is connected to an upper side of the bottom plate and defines, with the bottom plate, an accommodating cavity for accommodating the battery cell. The bottom plate is supported by the load-bearing bracket. The heat management component is integrated to the bottom plate.

In the foregoing technical solution, the battery module is supported by the bottom plate thereof and is connected to the load-bearing bracket. The battery module may be stably supported by the load-bearing bracket, and the battery module may be more reliably fastened to the load-bearing bracket. In addition, the heat management component is integrated to the bottom plate, thereby improving structural strength of the bottom plate, so that the bottom plate may better support the battery cell located in the shell. The overall center of gravity of the battery module is lowered, so that the overall structure of the battery module is more stable, and the battery module may be more stably mounted to the load-bearing bracket.

In some embodiments, the heat management component and the bottom plate are integrally formed.

In the foregoing technical solution, the heat management component and the bottom plate of the battery module are integrally formed. The quantity of parts can be reduced, a process of assembling the heat management component and the bottom plate can be omitted, and production efficiency can be improved.

In some embodiments, an outer wall of the shell is provided with two pipe joints communicating with the heat exchange channel. The pipe joint and the heat management joint are detachably connected through a first connection pipe, and/or the pipe joints between the heat management components are detachably connected through a second connection pipe.

In the foregoing technical solution, the outer wall of the shell is provided with the pipe joints communicating with the heat exchange channel of the heat management component, thereby facilitating connection and separation between the heat management component and the heat management joint or facilitating connection and separation between the heat management components.

In some embodiments, two pipe joints of a same battery module are located on a same side of the battery module.

In the foregoing technical solutions, the pipe joints of the same battery module are disposed on the same side, to facilitate connection or separation between the heat management component of the battery module and the heat management component or the heat management joint of another battery module.

In some embodiments, the plurality of battery modules are arranged in one or more layer in an up-down direction.

In the foregoing technical solution, the plurality of battery modules are arranged in one or more layers in the up-down direction, so that the battery modules may be arranged compactly, which is beneficial to improving the energy density of the battery.

In some embodiments, the plurality of battery modules are arranged in two or three layers in the up-down direction.

In the foregoing technical solution, the plurality of battery modules are arranged in the two layers or three layers in the up-down direction. In this way, the arrangement of the battery modules may be compact to be beneficial to improving the energy density of the battery, an entire height of the battery is not excessively large, and a use scenario of the battery is not affected, so that the height of the battery is suitable, thereby reducing limitations to the use scenario of the battery.

In some embodiments, the battery includes: a distribution box, where the distribution box is disposed on the load-bearing bracket, at least a part of the battery modules have first interfaces, the distribution box has second interfaces, the first interfaces and the second interfaces are connected through connection wiring harnesses, and the first interfaces of the battery modules in a same layer are located on a same side.

In the foregoing technical solutions, the interfaces of the battery modules in the same layer are disposed on the same side, so as to facilitate an operation of electrically connecting or separating the battery modules in the same layer to/from the distribution box, thereby improving efficiency of an electrical connection and a separation operation between the battery modules in the same layer and the distribution box.

In some embodiments, the plurality of battery modules are arranged in a plurality of layers in the up-down direction. Each layer includes a plurality of battery modules. Arrangement directions of at least two layers of battery modules are different. Length extension directions of the at least two layers of battery modules are different.

In the foregoing technical solution, the plurality of battery modules are arranged in the plurality of layers in the up-down direction, so that the battery modules may be arranged compactly, which is beneficial to improving the energy density of the battery. In addition, the arrangement directions of at least two layers of battery modules are different, and the length extension directions of the at least two layers of battery modules are different, so that the arrangement of the battery modules is more compact, and the whole is more balanced. Thus, the entire battery has higher structural strength, and the entire structure is more stable and reliable.

In some embodiments, one layer of battery modules in two adjacent layers of battery modules are arranged in a first direction and a length direction of the battery modules extends in a second direction. The other layer of battery modules in the two adjacent layers of battery modules are arranged in a second direction and a length direction of the battery modules extends in the first direction. The first direction and the second direction are perpendicular to each other and are parallel to a horizontal direction.

In the foregoing technical solution, the arrangement directions of the two adjacent layers of battery modules are perpendicular to each other and the extension directions of the two adjacent layers of battery modules are perpendicular to each other, so that the two adjacent layers of battery modules may be arranged in a cross manner, thereby further improving the structural strength of the entire battery. The entire structure is more stable and reliable.

In some embodiments, the battery includes: a distribution box, where the distribution box is disposed on the load-bearing bracket, the plurality of battery modules are arranged in a plurality of layers in the up-down direction, and the distribution box and the topmost battery modules are located in a same layer.

In the foregoing technical solution, the plurality of battery modules are arranged in the plurality of layers in the up-down direction, so that the battery modules may be arranged compactly, which is beneficial to improving the energy density of the battery. In addition, the distribution box and the topmost battery modules are located in the same layer, so that the distribution box is not blocked by the battery modules and an electrical connection between the distribution box and other components outside the battery is not affected, thereby facilitating implementation of the electrical connection between the distribution box and other components outside the battery.

In some embodiments, the distribution box is located in the middle of an arrangement direction of the topmost battery modules.

In the foregoing technical solution, the distribution box is located in the middle of the arrangement direction of the battery modules. In this way, structural layouts of opposite sides of the distribution box in the arrangement direction of the topmost battery modules are balanced, so that an entire structure of the battery is balanced and stable. When the battery is applied to a power consuming device, impact of vibration impact or load-bearing deformation on the distribution box can be reduced.

In some embodiments, the plurality of battery modules include a first battery module and a second battery module, and a quantity of the first battery module is at least one and a quantity of the second battery module is one. The second battery module is located in a topmost layer and is located in the middle of the arrangement direction of the topmost battery modules. The distribution box and the second battery module are integrated.

In the foregoing technical solution, the distribution box and the topmost second battery module are integrated, thereby realizing a compact structure, reducing the occupied space, and improving the overall energy density of the battery. In addition, because the second battery module is located in a topmost layer and is located in the middle of the arrangement direction of the topmost battery modules, that the distribution box is disposed in the topmost layer may be implemented, so that the distribution box is not blocked by the battery modules and an electrical connection between the distribution box and other components outside the battery is not affected, thereby facilitating implementation of the electrical connection between the distribution box and other components outside the battery. In addition, the distribution box is located in the middle of the arrangement direction of the topmost battery modules. In this way, structural layouts of opposite sides of the distribution box in the arrangement direction of the topmost battery modules are balanced, so that an entire structure of the battery is balanced and stable. When the battery is applied to a power consuming device, impact of vibration impact or load-bearing deformation on the distribution box can be reduced.

In some embodiments, the plurality of battery modules are arranged in two layers in the up-down direction. The plurality of battery modules in a lower layer are all the first battery modules. The battery modules in the lower layer include the first battery module and the second battery module. The first battery module has a first interface. The distribution box has a second interface. The first interface and the second interface are connected through a connection wiring harness. The first interfaces of the battery modules in a same layer are located on a same side. The second interface and the first interface of the first battery module in the upper layer are located on a same side.

In the foregoing technical solution, the plurality of battery modules are arranged in the two layers in the up-down direction. In this way, the arrangement of the battery modules may be compact to be beneficial to improving the energy density of the battery, an entire height of the battery is not excessively large, and a use scenario of the battery is not affected, so that the height of the battery is suitable, thereby reducing limitations to the use scenario of the battery. In addition, a manner of providing interfaces on the first battery module and the distribution box further facilitates connection and separation between the battery module and the distribution box. In addition, the interfaces of the battery modules in the same layer are disposed on the same side, so as to facilitate an operation of electrically connecting or separating the battery modules in the same layer to/from the distribution box, thereby improving efficiency of an electrical connection and a separation operation between the battery modules in the same layer and the distribution box. In addition, the second interface of the distribution box and the first interfaces of the first battery modules in an upper layer are located on a same side, thereby facilitating an electrical connection between the first battery modules in the same layer and the distribution box, and reducing a length of the connection wiring harness.

In some embodiments, the battery includes: a heat management system, where the heat management system includes a plurality of heat management components, the heat management component is disposed on the battery module to regulate a temperature of the battery module, the heat management component has a heat exchange channel through which a heat exchange medium flows, the battery module is provided with two pipe joints communicating with the heat exchange channel, and the pipe joints of the battery modules in a same layer are located on a same side.

In the foregoing technical solution, the heat management system including the plurality of heat management components is disposed. A temperature of each battery module may be regulated, so that the battery module has an independent heat management component, thereby improving efficiency of temperature regulation of the battery module by the heat management component, and facilitating maintenance for the battery module. In addition, the pipe joints of the battery modules in the same layer are located on the same side, thereby facilitating connection and separation between the heat management components of the battery modules in the same layer and between the heat management component of the battery module and the heat management joint, and reducing a length of a connection pipe between the heat management components of the battery modules in the same layer.

In some embodiments, the battery includes: a heat management system, where the heat management system includes a plurality of heat management components, the heat management component is disposed on the battery module to regulate a temperature of the battery module, and the heat management component has a heat exchange channel through which a heat exchange medium flows. The heat management system further includes a heat management joint. The heat management joint is disposed on the load-bearing bracket. At least a part of the heat management components are connected to the heat management joint. The plurality of battery modules are arranged in a plurality of layers in the up-down direction. The heat management joint and the topmost battery modules are located in a same layer.

In the foregoing technical solution, the heat management system including the plurality of heat management components is disposed. A temperature of each battery module may be regulated, so that the battery module has an independent heat management component, thereby improving efficiency of temperature regulation of the battery cell of the battery module by the heat management component, and facilitating maintenance for the battery module. In addition, the heat management joint and the topmost battery modules are located in the same layer, so that the heat management joint is not blocked by the battery modules and connection between the heat management joint and other components outside the battery is not affected, thereby facilitating the connection between the heat management joint and other components outside the battery.

In some embodiments, the load-bearing bracket includes a lower frame and a plurality of supporting baffles. The plurality of supporting baffles are disposed on the lower frame and are spaced apart in the first direction. At least a part of the battery modules are located between two adjacent supporting baffles. At least a part of the supporting baffles are detachably connected to the lower frame.

In the foregoing technical solution, the load-bearing bracket includes the lower frame and the plurality of supporting baffles. The lower frame may support the battery module, and the plurality of supporting baffles may space adjacent battery modules, or may limit the battery modules, so that the entire load-bearing bracket has high structural strength. In addition, at least the part of the supporting baffles are detachably connected to the lower frame, thereby facilitating assembly and disassembly of the battery module, realizing a more compact structure, reducing space waste, improving space utilization, and facilitating improving the energy density of the battery.

In some embodiments, the plurality of battery modules are arranged in two layers in the up-down direction. Each layer includes a plurality of battery modules. The battery modules in a lower layer are located between two adjacent supporting baffles. The plurality of battery modules in an upper layer are supported above the plurality of supporting baffles.

In the foregoing technical solution, the plurality of battery modules are arranged in the two layers in the up-down direction. In this way, the arrangement of the battery modules may be compact to be beneficial to improving the energy density of the battery, an entire height of the battery is not excessively large, and a use scenario of the battery is not affected, so that the height of the battery is suitable, thereby reducing limitations to the use scenario of the battery. The plurality of supporting baffles may have a spacing function for adjacent battery modules in a lower layer, or may have a position-limiting function for the battery modules in the lower layer. In addition, because the battery modules in an upper layer are supported on the plurality of supporting baffles, the plurality of supporting baffles may support the battery modules in the upper layer, and the load of the battery modules in the upper layer may be transferred to the lower frame through the plurality of supporting baffles, thereby reducing the impact on the battery modules in the upper layer, also reducing the impact on the battery modules in a lower layer, and facilitating prolonging the service life of the battery modules.

In some embodiments, the plurality of supporting baffles include first supporting baffles and second supporting baffles alternately arranged in the first direction. The first supporting baffles are detachably connected to the lower frame.

In the foregoing technical solution, a part of the plurality of supporting baffles are detachable, thereby further facilitating assembly and disassembly of the battery modules, realizing a more compact structure, reducing space waste, improving space utilization, and facilitating improving the energy density of the battery.

In some embodiments, a spacing between the battery modules on opposite sides of the first supporting baffle is a first spacing. A spacing between the battery modules on opposite sides of the second supporting baffle is a second spacing. The first spacing is less than the second spacing.

In the foregoing technical solution, detachable characteristics of the first supporting baffle may be used, so that a spacing between the battery modules on opposite sides of the first supporting baffle is relatively small, thereby realizing a more compact structure, reducing space waste, improving space utilization, and facilitating improving the energy density of the battery.

In some embodiments, the battery module includes a shell and a battery cell disposed in the shell. The shell includes a bottom plate and a case. The case is connected to an upper side of the bottom plate and defines, with the bottom plate, an accommodating cavity for accommodating the battery cell. A bottom surface of the first supporting baffle is supported on the bottom plate of two adjacent battery modules in a lower layer and is connected to the bottom plate. The bottom plate is connected to the lower frame. A bottom surface of the second supporting baffle is supported on and connected to the lower frame.

In the foregoing technical solution, the battery module may be sealed by the shell thereof, and the battery module is supported by the bottom plate thereof and is connected to the load-bearing bracket. The battery module may be stably supported by the load-bearing bracket. In addition, the bottom surface of the first supporting baffle is supported on the bottom plate of two adjacent battery modules in a lower layer, so that the first supporting baffle partially overlaps the bottom plate of the battery modules, thereby fully using space, reducing space waste, realizing a more compact structure, and facilitating improving the energy density of the battery. In addition, the first supporting baffle is connected to the bottom plate of the battery modules in the lower layer, so that the entire structural strength can be higher, and the stability can be better.

In some embodiments, a first fastener is penetrated through the first supporting baffle, the bottom plate, and the lower frame, to mount the battery module in a lower layer and the first supporting baffle to the lower frame.

In the foregoing technical solution, the first fastener is penetrated through the first supporting baffle, the bottom plate, and the lower frame, so as to implement a detachable connection between the battery module in a lower layer and the load-bearing bracket. In addition, a connection manner by using the fastener implements the connection between the battery module and the lower frame, so as to ensure mounting stability and reliability of the battery module in the lower layer, and further facilitating disassembling of the battery module in the lower layer. In addition, the first supporting baffle and the bottom plate share the first fastener, so that the first supporting baffle and the battery module in the lower layer are mounted and fastened to the lower frame, thereby reducing the quantity of fasteners and improving the disassembling efficiency.

In some embodiments, a hollow cavity is formed in the first supporting baffle. An avoidance hole communicating with the hollow cavity is formed at the top of the first supporting baffle. A connection hole is formed at the bottom of the first supporting baffle. The connection hole and the avoidance hole are opposite in the up-down direction. The first fastener is suitable for passing through the avoidance hole and the hollow cavity and being penetrated downward through the connection hole, the bottom plate, and the lower frame.

In the foregoing technical solution, the first supporting baffle is of a hollow structure, so that materials can be reduced and weight can be reduced while ensuring the structural strength of the first supporting baffle. In addition, an avoidance hole is provided at the top of the first supporting baffle, so that the first fastener can be pushed downward through the avoidance hole and a hollow cavity, to connect the first supporting baffle, the bottom plate, and the lower frame.

In some embodiments, the load-bearing bracket includes an upper bracket. The upper bracket is supported on upper surfaces of the plurality of supporting baffles and is connected to the plurality of supporting baffles. The battery module in an upper layer is supported on the upper bracket and is connected to the upper bracket.

In the foregoing technical solution, the upper bracket for supporting and fastening the battery module in the upper layer is disposed, thereby facilitating mounting and fastening of the battery module in the upper layer, and improving the structural strength of the load-bearing bracket.

In some embodiments, the battery module includes a shell and a battery cell disposed in the shell. The shell includes a bottom plate and a case. The case is connected to an upper side of the bottom plate and defines, with the bottom plate, an accommodating cavity for accommodating the battery cell. A second fastener is suitable for being penetrated between the bottom plate and the upper bracket, to mount the battery module in an upper layer to the upper bracket.

In the foregoing technical solution, the second fastener is penetrated between the bottom plate and the upper bracket, so as to implement a detachable connection between the battery module in the upper layer and the load-bearing bracket. In addition, a connection manner by using the fastener implements the detachable connection between the battery module and the upper bracket, so as to ensure mounting stability and reliability of the battery module in the upper layer, and further facilitating disassembling of the battery module in the upper layer.

According to a second aspect, an embodiment of this application further provides a power consuming device, including the foregoing battery. The battery is configured to provide electric energy for the power consuming device.

Other aspects and advantages of this application will be given in the following description, some of which will become apparent from the following description or may be learned from practices of this application.

### BRIEF DESCRIPTION OF THE DRAWINGS

The foregoing and/or additional aspects and advantages of this application will become apparent and comprehensible in the description of the embodiments made with reference to the following accompanying drawings.
FIG. 1 is a perspective view of a battery according to some embodiments of this application;
FIG. 2 is an exploded view of the battery in FIG. 1;
FIG. 3 is a partial exploded view of the battery in FIG. 1;
FIG. 4 is an enlarged view of A in FIG. 3;
FIG. 5 is an exploded view of a battery cell in FIG. 1;
FIG. 6 is an enlarged view of B in FIG. 5;
FIG. 7 is a cross-sectional view of the battery in FIG. 1;
FIG. 8 is an enlarged view of C in FIG. 7;
FIG. 9 is a perspective view of a load-bearing bracket of the battery in FIG. 1;
FIG. 10 is an exploded view of the load-bearing bracket in FIG. 9;
FIG. 11 is an enlarged view of D in FIG. 10; and
FIG. 12 is a schematic diagram of a power consuming device according to some embodiments of this application.

### Reference Numerals:

200: power consuming device;
100: battery;
10: load-bearing bracket; 101: accommodating space 11: lower frame; 12: supporting baffle; 13: first supporting baffle; 131: hollow cavity; 132: avoidance hole; 133: connection hole; 14: second supporting baffle; 15: upper bracket; 151: sub-bracket; 161: first fastener; 162: second fastener; 163: third fastener; 164: locking member;
20: battery module; 21: shell; 201: accommodating cavity 211: case; 2111: connection flange; 2112: end cover; 212: bottom plate; 22: battery group; 221: battery cell; 222: belt; 223: end plate; 224: electrical connection plate; 225: electrical connector; 23: first interface; 24: heat management component; 241: pipe joint;
30: first battery module; 40: second battery module;
50: distribution box; 51: second interface; 52: butt connector; 521: butt interface;
60: heat management joint; 61: liquid inlet and outlet port.

### DETAILED DESCRIPTION

Embodiments of this application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining this application, and should not be construed as a limitation on this application.

To make the objectives, technical solutions, and advantages of embodiments of this application clearer, the following clearly describes the technical solutions in the embodiments of this application with reference to the accompanying drawings in the embodiments of this application. Apparently, the described embodiments are merely some embodiments of this application rather than all of the embodiments. All other embodiments obtained by a person of ordinary skill in the art based on the embodiments of this application without making creative efforts shall fall within the protection scope of this application.

Unless otherwise defined, meanings of all technical and scientific terms used in this specification are the same as those usually understood by a person skilled in the art to which this application belongs. In this application, terms used in the specification of this application are merely intended to describe objectives of specific embodiments, but are not intended to limit this application. The terms "include/comprise" and "have" and any variations thereof in the specification and claims of this application and the Brief Description of the Drawings are intended to cover non-exclusive inclusions. The terms "first", "second", etc. in the specification and claims of this application or the drawings are intended to distinguish different objects, and not to describe a specific order or primary-secondary relationship.

Reference to "an embodiment" in this application means that a particular feature, structure or characteristic described in combination with the embodiment may be included in at least one embodiment of this application. The presence of the phrase in various places in the specification does not necessarily refer to the same embodiment, nor is it an independent or alternative embodiment that is mutually exclusive from other embodiments.

In the description of this application, it should be noted that unless otherwise explicitly specified or defined, the terms such as "mount", "connect", "connection", and "attach" should be understood in a broad sense. For example, the connection may be a fastened connection, a detachable connection, or an integral connection; or the connection may be a direct connection, an indirect connection through an intermediary, or internal communication between two components. A person of ordinary skill in the art may understand the specific meanings of the foregoing terms in this application according to specific situations.

In this application, the term "and/or" is merely an association to describe associated objects, and means that there are three relationships, such as A and/or B, which means that A exists alone, A and B exist at the same time, and B exists alone. In addition, the character "/" in this application generally indicates an "or" relationship between the associated objects.

In the embodiments of this application, same reference numerals represent same components, and for brevity, detailed descriptions of the same components are omitted in different embodiments. It will be appreciated that dimensions, such as the thickness, the length, and the width of various components in the embodiments of this application and the entire thickness, length, and the width of an integrated apparatus shown in the accompanying drawings are merely exemplary descriptions, and should not be construed as any limitation to this application.

"Plurality of" in this application means two and more (including two).

In this application, a battery 100 is a single physical module including a plurality of battery modules 20 to provide a higher voltage and a higher capacity. The plurality of battery modules 20 may be connected in series, in parallel, or in a series-parallel mixed manner to form the battery 100. The series-parallel mixed manner means that the plurality of battery modules 20 are connected both in series and in parallel. The battery module 20 may include one or more battery cells 221. When the battery module 20 includes a plurality of battery cells 221, the plurality of battery cells 221 of the battery module 20 may be connected in series, in parallel, or in a series-parallel mixed manner. The battery module 20 may further include a shell 21 for encapsulating one or more battery cells 221. The shell 21 may prevent liquid or other foreign matters from affecting charging or discharging of the battery cells 221. The shell 21 may have a plurality of structures. For example, in some embodiments, the shell 21 may include a first part and a second part. The first part and the second part cover each other to form an accommodating cavity 201. The battery cells 221 are placed in the accommodating cavity 201.

In this application, the battery cell 221 may include a lithium ion secondary battery, a lithium ion primary battery, a lithium-sulfur battery, a sodium-lithium ion battery, a sodium ion battery, a magnesium ion battery, or the like. This is not limited in the embodiments of this application. The battery cell 221 may be cylindrical, flat, cuboid, or in other shapes. This is not limited in the embodiments of this application either. Generally, the battery cell 221 is divided into three types according to encapsulating methods: a cylindrical battery cell, a square battery cell, and a pouch cell. This is not limited in the embodiments of this application either.

For example, the battery cell 221 may include a battery case, an electrode assembly, and an electrolyte. The battery case is configured to accommodate the electrode assembly and the electrolyte. The electrode assembly is formed by a positive electrode plate, a negative electrode plate, and a separator. The battery cell 221 works mainly relying on the movement of metal ions between the positive electrode plate and the negative electrode plate. The positive electrode plate includes a positive electrode current collector and a positive electrode active material layer. The positive electrode active material layer is coated to a surface of the positive electrode current collector. The positive electrode current collector not coated with the positive electrode active material layer protrudes out of the positive electrode current collector already coated with the positive electrode active material layer. The positive electrode current collector not coated with the positive electrode active material layer is used as a positive electrode tab. By using a lithium ion battery as an example, a material of the positive electrode current collector may be aluminum, and a positive electrode active material may be lithium cobalt oxide, lithium iron phosphate, ternary lithium, lithium manganese oxide, or the like.

The negative electrode plate includes a negative electrode current collector and a negative electrode active material layer. A surface of the negative electrode current collector is coated with the negative electrode active material layer. The negative electrode current collector not coated with the negative electrode active material layer protrudes from the negative electrode collector already coated with the negative electrode active material layer. The negative electrode current collector not coated with the negative electrode active material layer is used as a negative electrode tab. A material of the negative electrode current collector may be copper. A negative electrode active material may be carbon or silicon. To ensure that no fusing occurs when a large current passed through, there are a plurality of positive electrode tabs and the positive electrode tabs are laminated, and there are a plurality of negative electrode tabs and the negative electrode tabs are laminated.

The separator may be made of a material such as polypropylene (PP) or polyethylene (PE). In addition, the electrode assembly may be either of a winding type structure or a stacked structure. This is not limited in the embodiments of this application.

In the related art, to increase the power of a battery, the battery usually includes a plurality of battery cells, and all the battery cells are accommodated in a sealed space defined by a large battery case, to form a large battery pack. Because all the battery cells are accommodated in a large battery case, maintenance for the battery may be performed by opening the entire battery case. Consequently, it is difficult to maintain the battery. In addition, when the battery is faulty, the entire battery usually needs to be replaced, resulting in high costs.

Based on this, to reduce maintenance difficulty and maintenance costs of the battery 100, the applicant makes an intense research and proposes a battery 100. The battery 100 includes a load-bearing bracket 10 and a plurality of battery modules 20. The plurality of battery modules 20 are mounted to the load-bearing bracket 10. At least one battery module 20 is detachably mounted to the load-bearing bracket 10.

In the technical solution of this application, the battery 100 includes the plurality of battery modules 20 and the load-bearing bracket 10 for mounting the plurality of battery modules 20. The entire battery 100 may have a high battery level. During maintenance for the battery 100, because the entire battery 100 does not have an entire external case, an operation of opening the case is omitted, and the maintenance difficulty of the battery 100 is reduced. In addition, at least one battery module 20 is detachably mounted to the load-bearing bracket 10, so as to facilitate maintenance and replacement of the battery module 20. When the battery 100 is faulty, only a faulty battery module 20 needs to be repaired or replaced, thereby reducing maintenance costs of the battery 100.

The battery 100 disclosed in the embodiments of this application may be used in, but is not limited to, a power consuming device 200 such as a vehicle, a ship, or an aircraft. The battery 100 disclosed in this application may constitute a power supply system of the power consuming device 200, so as to reduce maintenance difficulty and maintenance costs of the battery 100 of the power consuming device 200.

An embodiment of this application provides a power consuming device 200 using the battery 100 as a power supply. The power consuming device 200 may be, but is not limited to, a battery car, an electric automobile, a ship, a spacecraft, or the like. The electric automobile may include a track, an engineering car, a car, and the like. The spacecraft may include an airplane, a rocket, a spacecraft, a spaceship, and the like.

The battery 100 according to an embodiment of this application is described below with reference to the drawings.

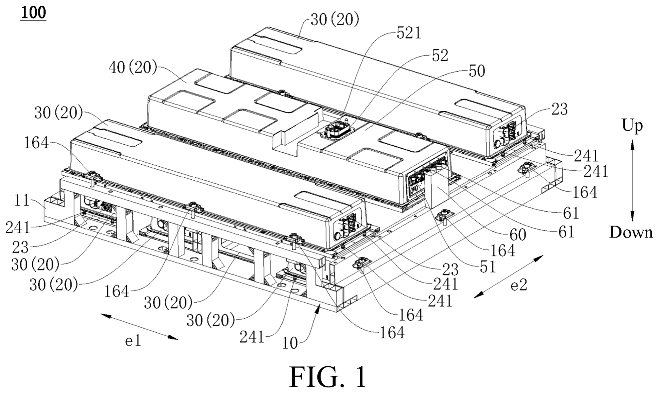

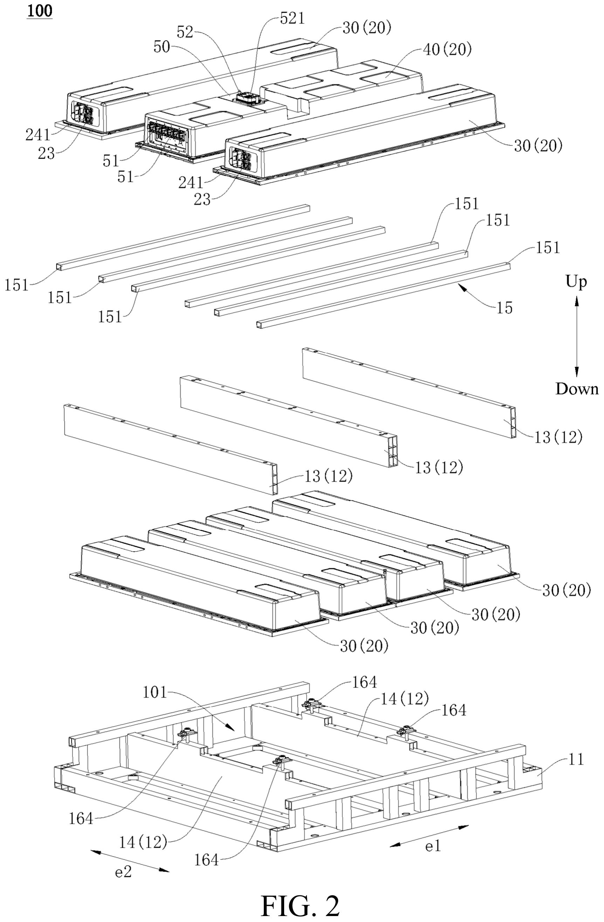

As shown in FIG. 1 to FIG. 3, an embodiment of this application provides a battery 100, including: a load-bearing bracket 10 and a plurality of battery modules 20. The plurality of battery modules 20 are mounted to the load-bearing bracket 10. At least one battery module 20 is detachably mounted to the load-bearing bracket 10.

The load-bearing bracket 10 is different from the battery case in the related art. An accommodating space 101 defined in the load-bearing bracket 10 for accommodating the battery modules 20 is in communication with an external environment. The accommodating space 101 defined in the load-bearing bracket 10 for accommodating the battery modules 20 is an open space. In this way, at least a part of the battery modules 20 are exposed to the external environment, thereby facilitating disassembling and maintenance of the battery modules 20. For example, the load-bearing bracket 10 may be a bracket structure having a hollow structure. Alternatively, the load-bearing bracket 10 may have a bracket structure that is open on one side. For example, an upper side of the load-bearing bracket 10 may be open, to facilitate loading of the battery module 20 into the load-bearing bracket 10 from the upper side of the load-bearing bracket 10 or removing from the load-bearing bracket 10.

The load-bearing bracket 10 is mainly configured to bear a weight of all the battery modules 20, and may further implement a function of mounting and fastening the battery modules 20. The load-bearing bracket 10 may be a metal bracket. For example, the load-bearing bracket 10 may be a steel structure bracket, so that the load-bearing bracket 10 has relatively high structural strength, thereby stably and reliably supporting the plurality of battery modules 20.

That "at least one battery module 20 is detachably mounted to the load-bearing bracket 10" may be that one of the battery modules 20 is detachably mounted to the load-bearing bracket 10, may be that the part of the battery modules 20 are detachably mounted to the load-bearing bracket 10, or may be that each of the battery modules 20 is detachably mounted to the load-bearing bracket 10.

That "the battery module 20 is detachably mounted to the load-bearing bracket 10" means that the battery module 20 may be detached from the load-bearing bracket 10, and the detached battery module 20 may be re-mounted to the load-bearing bracket 10. A detachable connection manner of the battery module 20 may include at least one of a clamping connection manner and a fastener connection manner.

In the foregoing technical solution, the battery 100 includes the plurality of battery modules 20 and the load-bearing bracket 10 for mounting the plurality of battery modules 20. The entire battery 100 may have a high battery level. During maintenance for the battery 100, because the entire battery 100 does not have an entire external case, an operation of opening the case is omitted, and the maintenance difficulty of the battery 100 is reduced. In addition, at least one battery module 20 is detachably mounted to the load-bearing bracket 10, so as to facilitate maintenance and replacement of the battery module 20. When the battery 100 is faulty, only a faulty battery module 20 needs to be repaired or replaced, thereby reducing maintenance costs of the battery 100.

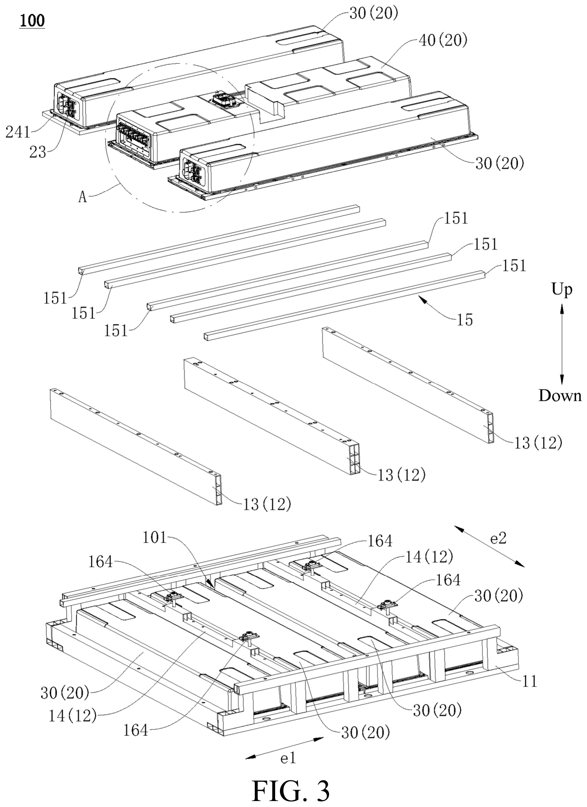

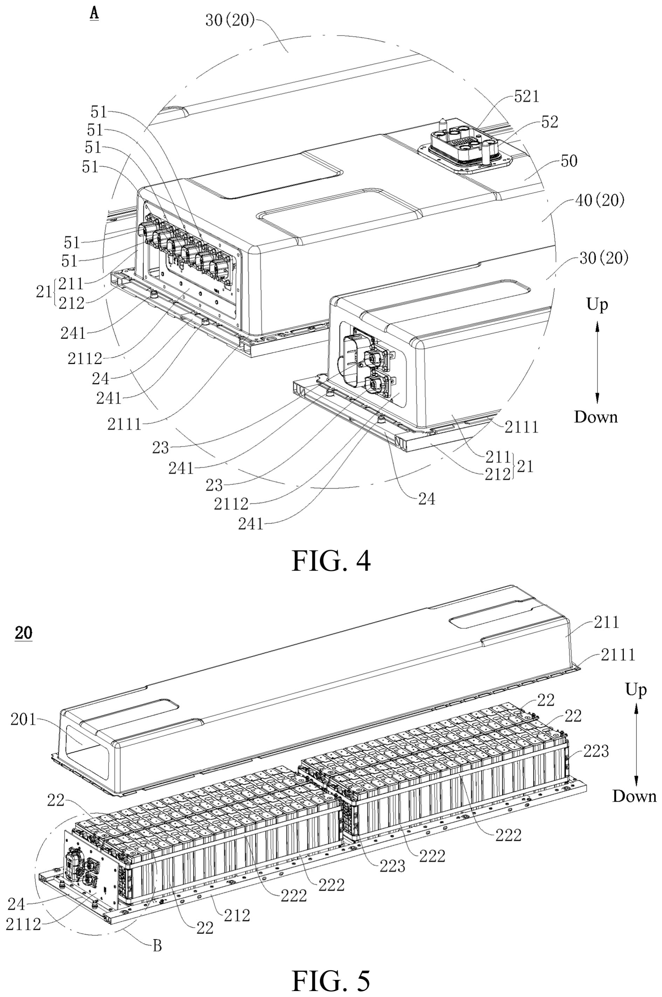

In some embodiments, referring to FIG. 3 and FIG. 5, the battery module 20 includes a shell 21 and at least one battery cell 221. The battery cell 221 is disposed in the shell 21. The shell 21 is detachably connected to the load-bearing bracket 10.

A closed accommodating cavity 201 is defined in the shell 21 of the battery module 20. The battery cell 221 is disposed in the closed accommodating cavity 201 defined in the shell 21. The battery cell 221 may be protected.

The shell 21 may be a metal part, or the shell 21 may be a non-metal part. When the shell 21 is a metal part, an insulation structure may be disposed between the battery cell 221 and the shell 21, so that the battery cell 221 and the shell 21 are insulated and separated.

That "the battery module 20 includes at least one battery cell 221" means that a single battery module 20 may include one battery cell 221. The single battery module 20 may alternatively include a plurality of battery cells 221. When the battery module 20 includes the plurality of battery cells 221, the plurality of battery cells 221 may be divided into at least one battery group 22. The battery group 22 includes the plurality of battery cells 221 arranged in parallel. When the battery module 20 includes a plurality of battery groups 22, the plurality of battery groups 22 may be arranged in a horizontal direction, the plurality of battery groups 22 may be arranged in an up-down direction, or the plurality of battery groups 22 may be arranged in the horizontal direction and the up-down direction.

In the foregoing technical solution, the battery module 20 may be sealed by the shell 21 thereof. The shell 21 of the battery module 20 is detachably connected to the load-bearing bracket 10, thereby conveniently implementing a detachable connection between the battery module 20 and the load-bearing bracket 10. In addition, compared with a manner of fastening the battery module 20 through compressing, the detachable connection between the shell 21 of the battery module 20 and the load-bearing bracket 10 enables the battery module 20 to be mounted and fastened to the load-bearing bracket 10 more reliably, and a problem of extrusion damage to the battery module 20 caused by the manner of fastening through compressing may be avoided.

In some embodiments, referring to FIG. 3 to FIG. 5, the shell 21 includes a bottom plate 212 and a case 211. The case 211 is connected to an upper side of the bottom plate 212. An accommodating cavity 201 for accommodating the battery cell 221 is defined between the case 211 and the bottom plate 212. The bottom plate 212 is supported by the load-bearing bracket 10 and the bottom plate 212 is detachably connected to the load-bearing bracket 10.

A lower side of the case 211 is open, and the bottom plate 212 is configured to cover the lower side of the case 211. In this way, a closed accommodating cavity 201 may be defined between the case 211 and the bottom plate 212.

In the foregoing technical solution, the battery module 20 is supported by the bottom plate 212 thereof and is connected to the load-bearing bracket 10. The battery module 20 may be stably supported by the load-bearing bracket 10, and the battery module 20 may be more reliably fastened to the load-bearing bracket 10.

Optionally, a thickness of the bottom plate 212 may be greater than a thickness of the case 211. In this way, the bottom plate 212 has relatively high structural strength, can improve stable support for the battery cell 221, and can lower the overall center of gravity of the battery module 20, so that the entire battery module 20 is relatively stable after being mounted on the load-bearing bracket 10.

In some embodiments, a projection of the case 211 in a horizontal plane is a first projection, and a projection of the bottom plate 212 in the horizontal plane is a second projection. The first projection is located within the second projection.

That "the first projection is located within the second projection" means that an outer contour line of the first projection is located on an inner peripheral side of an outer contour line of the second projection.

In the foregoing technical solution, the projection of the case 211 in the horizontal plane is located within the projection of the bottom plate 212 in the horizontal plane. In this way, with a large bottom plate 212, a support area of the load-bearing bracket 10 for the battery module 20 may be enlarged, thereby further improving stability of supporting the battery module 20 by the load-bearing bracket 10.

In some embodiments, a fastener is penetrated between the bottom plate 212 and the load-bearing bracket 10, to mount the battery module 20 to the load-bearing bracket 10.

The fastener may be a threaded fastener. The fastener may be in a threaded connection with the bottom plate 212 and the fastener may be in a threaded connection with the load-bearing bracket 10.

In the foregoing technical solution, the fastener is penetrated between the bottom plate 212 and the load-bearing bracket 10, so as to implement a detachable connection between the battery module 20 and the load-bearing bracket 10. The battery module 20 may be locked to the load-bearing bracket 10 in a connection manner using the fastener. In addition, the connection manner using the fastener not only implements the detachable connection between the battery module 20 and the load-bearing bracket 10, so as to facilitate disassembling of the battery module 20, but also ensures mounting stability and reliability of the battery module 20.

In some embodiments, referring to FIG. 4 and FIG. 5, a lower edge of the case 211 is formed with a connection flange 2111. The connection flange 2111 is detachably connected to the bottom plate 212.

The connection flange 2111 formed at the lower edge of the case 211 may be formed by folding the lower edge of the lower case 211 outward. The connection flange 2111 may overlap the bottom plate 212 in an up-down direction and the connection flange 2111 is located on an upper surface of the bottom plate 212. In this way, it is convenient for the connection flange 2111 of the case 211 to be connected to the bottom plate 212. A sealing member may be further disposed at a connection between the connection flange 2111 of the case 211 and the bottom plate 212, so as to implement a sealing connection between the case 211 and the bottom plate 212.

That "the connection flange 2111 is detachably connected to the bottom plate 212" means that the case 211 may be separated from the bottom plate 212 to open the accommodating cavity 201, and the detached case 211 may be re-mounted to the bottom plate 212. A detachable connection manner of the connection flange 2111 and the bottom plate 212 may include at least one of a clamping connection manner and a fastener connection manner.

In the foregoing technical solution, the connection flange 2111 is disposed at the lower edge of the case 211, thereby facilitating connection and fastening between the case 211 and the bottom plate 212. In addition, the connection flange 2111 is detachably connected to the bottom plate 212, thereby implementing opening of the battery module 20, to facilitate maintenance for the battery cell 221 in the battery module 20.

In some embodiments, referring to FIG. 1 to FIG. 4, the battery includes: a distribution box 50. The distribution box 50 is disposed on the load-bearing bracket 10. At least a part of the battery modules 20 are detachably connected to the distribution box 50 through a connection wiring harness.

The distribution box 50 is a battery energy distribution unit of the battery 100. All the battery modules 20 are electrically connected to the distribution box 50. The distribution box 50 is electrically connected to an apparatus that needs to be powered. The distribution box 50 is a component that implements an electrical connection between the battery 100 and the apparatus that needs to be powered, so that the battery 100 supplies power to the apparatus that needs to be powered.

At least a part of the battery modules 20 are detachably connected to the distribution box 50 through a connection wiring harness. For example, a part of the battery modules 20 may be detachably connected to the distribution box 50 through the connection wiring harness, or each of the battery modules 20 may be detachably connected to the distribution box 50 through the connection wiring harness.

The battery module 20 (referring to the battery module 20 detachably connected to the load-bearing bracket 10) detachably connected to the load-bearing bracket 10 is detachably connected to the distribution box 50 through the connection wiring harness.

In the foregoing technical solution, a detachable connection between at least the part of the battery modules 20 and the distribution box 50 is implemented through the connection wiring harness. Not only a mechanical connection structure of the battery module 20 may be disassembled, but also an electrical connection structure of the battery module 20 may be disassembled, thereby implementing smooth disassembling of the entire battery module 20.

In some embodiments, referring to FIG. 1 to FIG. 4, at least a part of the battery modules 20 have a first interface 23. The distribution box 50 has a second interface 51. Two ends of the connection wiring harness are respectively connected to the first interface 23 and the second interface 51. The connection wiring harness is detachably connected to at least one of the first interface 23 and the second interface 51.

A single battery module 20 may have two first interfaces 23. One of the two first interfaces 23 is a positive electrode, and the other one of the two first interfaces 23 is a negative electrode. The distribution box 50 has an even number of second interfaces 51. The distribution box 50 has at least one pair of second interfaces 51. One of the pair of second interfaces 51 is a positive electrode and the other is a negative electrode. The first interface 23 of the battery module 20 and the second interface 51 of the distribution box 50 may be connected according to a need of a connection manner in a series-parallel relationship of the plurality of battery modules 20.

For example, all the battery modules 20 are connected in parallel. The first interface 23 serving as a positive electrode in each of the battery modules 20 is connected to the second interface 51 serving as a positive electrode in the distribution box 50 through the connection wiring harness. The first interface 23 serving as a negative electrode in each of the battery modules 20 is connected to the second interface 51 serving as a negative electrode in the distribution box 50 through the connection wiring harness.

For another example, all the battery modules 20 are sequentially connected in series. The first interfaces 23 of opposite polarity in two adjacent battery modules 20 are connected. The first interface 23 serving as a positive electrode in one of the battery modules 20 is connected to the second interface 51 serving as a positive electrode in the distribution box 50. The first interface 23 serving as a negative electrode in one of the battery modules 20 is connected to the second interface 51 serving as a negative electrode in the distribution box 50.

For another example, the plurality of battery modules 20 are connected in a series-parallel mixed manner. For example, the plurality of battery modules 20 may be divided into a plurality of groups. Each group includes at least two battery modules 20. The two battery modules 20 in each group are connected in series. The first interfaces 23 of opposite polarity in the two battery modules 20 in each group are connected. The remaining first interfaces 23 in the two battery modules 20 in each group are connected to the second interfaces 51 of corresponding polarity in the distribution box 50.

At least a part of the battery modules 20 have first interfaces 23. To be specific, a part of the battery modules 20 may have first interfaces 23. Alternatively, each of the battery modules 20 may have a first interface 23. The battery module 20 detachably connected to the distribution box 50 through a connection wiring harness has a first interface 23.

That the connection wiring harness is detachably connected to at least one of the first interface 23 and the second interface 51 may include the following cases: For example, the connection wiring harness may be detachably connected to the first interface 23. In this way, the battery module 20 may be detachably connected to the distribution box 50 through the connection wiring harness by connecting the connection wiring harness to the first interface 23 or disconnecting the connection wiring harness from the first interface 23. For another example, the connection wiring harness may be detachably connected to the second interface 51. In this way, the battery module 20 may be detachably connected to the distribution box 50 through the connection wiring harness by connecting the connection wiring harness to the second interface 51 or disconnecting the connection wiring harness from the second interface 51. For another example, the connection wiring harness may be detachably connected to the first interface 23 and the connection wiring harness may be detachably connected to the second interface 51. In this way, the battery module 20 may be detachably connected to the distribution box 50 through the connection wiring harness by connecting the connection wiring harness to the first interface 23 or disconnecting the connection wiring harness from the first interface 23 or by connecting the connection wiring harness to the second interface 51 or disconnecting the connection wiring harness from the second interface 51.

A detachable connection manner between the connection wiring harness and the first interface 23 may be plugging connection. For example, one end of the connection wiring harness has a first plugging terminal. The first plugging terminal may be plugged to the first interface 23. Similarly, a detachable connection manner between the connection wiring harness and the second interface 51 may be plugging connection. For example, the other end of the connection wiring harness has a second plugging terminal. The second plugging terminal may be plugged to the second interface 51.

In the foregoing technical solution, a manner of providing interfaces between the battery modules 20 and the distribution box 50 further facilitates connection and separation between the battery modules 20 and the distribution box 50.

In some embodiments, referring to FIG. 1 to FIG. 4, the distribution box 50 has a plurality of second interfaces 51. All the second interfaces 51 are located on a same side of the distribution box 50.

That all the second interfaces 51 are located on a same side of the distribution box 50 means that all the second interfaces 51 are located on a same side of the distribution box 50 in a horizontal direction.

In the foregoing technical solution, the plurality of second interfaces 51 on the distribution box 50 are disposed on the same side of the distribution box 50. A plurality of connection wiring harnesses connecting the plurality of battery modules 20 may be conveniently connected to the same side of the distribution box 50, thereby facilitating disassembling of the connection wiring harnesses and also facilitating maintenance.

In some embodiments, referring to FIG. 1 to FIG. 4, the plurality of battery modules 20 include a first battery module 30 and a second battery module 40, and a quantity of the first battery module 30 is at least one and a quantity of the second battery module 40 is one. The first battery module 30 is detachably connected to the distribution box 50 through the connection wiring harness. The distribution box 50 and the second battery module 40 are integrated.

That there is at least one first battery module 30 means that there may be one first battery module 30, or there may be a plurality of first battery modules 30. At least one first battery module 30 may be detachably mounted to the load-bearing bracket 10.

It may be understood that because the distribution box 50 and the second battery module 40 are integrated, the second battery module 40 may not be provided with the foregoing first interface 23, and the battery cell 221 of the second battery module 40 may be directly electrically connected to the distribution box 50 inside the second battery module 40.

That the distribution box 50 and the second battery module 40 are integrated means that the distribution box 50 is integrated with the second battery module 40 into an integral structure. The second battery module 40 may be detachably mounted to the load-bearing brackets 10. Because the distribution box 50 and the second battery module 40 are integrated, the distribution box 50 and the second battery module 40 may be entirely detached from the load-bearing bracket 10, or the distribution box 50 and the second battery module 40 may be entirely mounted to the load-bearing bracket 10.

In the foregoing technical solution, the distribution box 50 and one of the battery modules 20 are integrated, thereby realizing a compact structure, reducing the occupied space, and improving the overall energy density of the battery 100.

In some embodiments, referring to FIG. 1 to FIG. 5, the battery module 20 includes a shell 21 and a battery cell 221 disposed in the shell 21. The shell 21 of the first battery module 30 is provided with a first interface 23. The distribution box 50 includes a box and an electrical assembly disposed in the box. The shell 21 of the second battery module 40 forms the box, and the shell 21 of the second battery module 40 is provided with a second interface 51. The electrical assembly is electrically connected to the second interface 51. Two ends of the connection wiring harness are respectively connected to the first interface 23 and the second interface 51. The connection wiring harness is detachably connected to at least one of the first interface 23 and the second interface 51. The battery cell 221 of the second battery module 40 is electrically connected to the electrical assembly.

That the shell 21 of the second battery module 40 forms the box means that a part of the shell 21 of the second battery module 40 forms the box.

The second interface 51 is electrically connected to the electrical assembly. For example, the second interface 51 and the electrical assembly may be electrically connected through an internal wiring harness. The internal wiring harness routes in the box. The battery cell 221 of the second battery module 40 and the electrical assembly of the distribution box 50 are located in the shell 21 of the second battery module 40. In this way, the battery cell 221 of the second battery module 40 or the battery group 22 including the plurality of battery cells 221 may be directly electrically connected to the electrical assembly in the shell 21 of the second battery module 40.

An electrical connection between the first battery module 30 and the distribution box 50 is implemented by connecting the first interface 23 and the second interface 51 through the connection wiring harness. It should be noted that connection between the plurality of first battery modules 30 and connection between the first battery module 30 and the distribution box 50 may be determined according to a series-parallel manner of the plurality of battery modules 20. For example, a part of the first battery modules 30 may be electrically connected to the distribution box 50 after being connected in series.

For example, when the battery 100 includes a plurality of first battery modules 30 and one second battery module 40, the plurality of battery modules 20 of the battery 100 may be connected in the following serial-parallel manner: The plurality of first battery modules 30 are formed into a plurality of module groups. The second battery module 40 includes a plurality of battery cells 221. The plurality of second battery cells 221 of the second battery module 40 are divided into a plurality of battery groups. The quantity of the module groups is the same as the quantity of the battery groups, and the module groups are in a one-to-one correspondence with the battery groups. Each module group includes a plurality of battery modules 20. After the plurality of battery modules 20 in each module group are sequentially connected in series, the first interface 23 and the second interface 51 of the distribution box 50 are connected through the connection wiring harness, so that an electrical connection between the module group and the distribution box 50 can be implemented. The plurality of battery groups of the second battery module 40 are all electrically connected to the electrical assembly of the distribution box 50, and by means of a circuit design, each module group and a corresponding battery group are connected in series to form a battery branch. In this way, a plurality of battery branches connected in parallel may be formed.

In the foregoing technical solution, the second battery module 40 and the distribution box 50 are integrated, thereby realizing a compact structure, reducing the occupied space, and improving the overall energy density of the battery 100. The distribution box 50 shares the shell 21 of the second battery module 40, thereby sealing the distribution box 50, avoiding separately providing a box for the distribution box 50, and reducing the quantity of parts. In addition, the structure may further be compact, and the occupied space may be further reduced. In addition, the battery cell 221 in the second battery module 40 may be electrically connected to an electrical assembly of the distribution box 50 in the shell 21 of the second battery module 40, so that an interface for connecting the distribution box 50 may be omitted from the outside of the second battery module 40.

In some embodiments, referring to FIG. 4 to FIG. 6, the battery includes: a heat management system. The heat management system includes a plurality of heat management components 24. The battery module 20 includes a shell 21 and a battery cell 221 disposed in the shell 21. The heat management component 24 is disposed on the shell 21 or in the shell 21 to regulate a temperature of the battery cell 221.

The regulation of the temperature of the battery cell 221 by using the heat management component 24 includes at least one of increase of the temperature of the battery cell 221 and reduction of the temperature of the battery cell 221 by using the heat management component 24. For example, the heat management component 24 may be configured to increase the temperature of the battery cell 221 and may be configured to reduce the temperature of the battery cell 221.

The heat management component 24 is configured to regulate the temperature of the battery cell 221. The heat management component 24 may be in heat conduction contact with the battery cell 221, thereby realizing temperature regulation of the battery cell 221 by using the heat management component 24.

Optionally, the quantity of the heat management components 24 is the same as the quantity of the battery modules 20, and the heat management components are in a one-to-one correspondence with the battery modules.

In the foregoing technical solution, the heat management system including the plurality of heat management components 24 is disposed. A temperature of each battery module 20 may be regulated. In addition, the heat management component 24 is disposed in the shell 21 of the battery module 20, so that the battery module 20 has an independent heat management component 24, thereby improving efficiency of temperature regulation of the battery cell 221 of the battery module 20 by the heat management component 24, and facilitating maintenance for the battery module 20.

In some embodiments, referring to FIG. 1, the heat management component 24 has a heat exchange channel through which a heat exchange medium flows. The plurality of heat management components 24 are connected in series, in parallel, or in a series-parallel mixed manner. The heat management system further includes a heat management joint 60. The heat management joint 60 is disposed on the load-bearing bracket 10 and is located outside the battery module 20. The heat management component 24 is detachably connected to the heat management joint 60 and/or the heat management components 24 are detachably connected to each other.

The heat management component 24 has a heat exchange channel through which a heat exchange medium flows. In a process that the heat exchange medium flows in the heat exchange channel, the heat exchange medium may carry away heat from the battery cell 221, or the heat exchange medium may transfer heat to the battery cell 221, to heat the battery cell 221. The heat exchange medium may be a liquid-state heat exchange medium. For example, the heat exchange medium may include water.

The heat management joint 60 may have two liquid inlet and outlet ports 61. The heat exchange medium flows into the heat management joint 60 through one of the two liquid inlet and outlet ports 61, flows into the heat management joint 60 after flowing through the heat exchange channel, and may flow out through the other of the two liquid inlet and outlet ports 61. When the heat management joint 60 is connected to other external components to form a circulation flow path, the two liquid inlet and outlet ports 61 of the heat management joint 60 are connected to other external components to form the circulation flow path.

When the plurality of heat management components 24 are connected in series, the heat exchange medium flowing into the heat management joint 60 may sequentially flow through the plurality of heat management components 24, and then flow out of the heat management joint 60. When the plurality of heat management components 24 are connected in parallel, the heat exchange medium flowing from the heat management joint 60 may simultaneously flow through the plurality of heat management components 24, is collected at the heat management joint 60, and then flows out. When the plurality of heat management joints 60 are connected in a series-parallel mixed manner, for example, the plurality of heat management joints 60 are divided into a plurality of heat management groups and each heat management group includes a plurality of heat management components 24 connected in series, the heat exchange medium flowing from the heat management joint 60 may simultaneously flow through the plurality of heat management groups. When flowing through each heat management group, the heat exchange medium may sequentially flow through the plurality of heat management components 24 in each heat management group, is collected at the heat management joint 60, and then flows out.

In the foregoing technical solution, the plurality of heat management components 24 share one heat management joint 60, and the heat exchange medium may flow into the plurality of heat management components 24 or flow out of the plurality of heat management components 24 through the shared heat management joint 60. It is convenient for the heat management system to be connected to another component through the shared heat management joint 60, to implement a circulation flow of the heat exchange medium, thereby reducing a quantity of heat management joints 60, and facilitating connection or separation of the heat management system to/from another component.

In some embodiments, referring to FIG. 1, the heat management joint 60 is close to an outer edge of the load-bearing bracket 10.

The outer edge of the load-bearing bracket 10 is an outer edge of the load-bearing bracket 10 in a horizontal direction.

In the foregoing technical solution, the heat management joint 60 is close to the outer edge of the load-bearing bracket 10, so that the heat management joint 60 is not blocked by the load-bearing bracket 10 and the battery module 20, thereby facilitating an operation of connecting or separating the heat management system of the battery 100 to/from another component.

In some embodiments, referring to FIG. 4 to FIG. 6, the heat management component 24 may be integrated to the shell 21.

That the heat management component 24 may be integrated to the shell 21 means that the heat management component 24 and the shell 21 are integrated into a whole.

In the foregoing technical solution, the heat management component 24 is integrated to the shell 21, thereby realizing a compact structure of the battery module 20, reducing the occupied space, and improving the energy density of a single battery module 20.

In some embodiments, referring to FIG. 4 to FIG. 6, the shell 21 includes a bottom plate 212 and a case 211. The case 211 is connected to an upper side of the bottom plate 212. An accommodating cavity 201 for accommodating the battery cell 221 is defined between the case 211 and the bottom plate 212. The bottom plate 212 is supported by the load-bearing bracket 10. The heat management component 24 is integrated to the bottom plate 212.

That the heat management component 24 is integrated to the bottom plate 212 means that the heat management component 24 and the bottom plate 212 are integrated. The heat management component 24 and the bottom plate 212 may jointly support the battery cell 221 of the battery module 20. For example, the bottom plate 212 may have a hollow structure, and the hollow structure in the bottom plate 212 may include the foregoing heat exchange channel.

In the foregoing technical solution, the battery module 20 is supported by the bottom plate 212 thereof and is connected to the load-bearing bracket 10. The battery module 20 may be stably supported by the load-bearing bracket 10, and the battery module 20 may be more reliably fastened to the load-bearing bracket 10. In addition, the heat management component 24 is integrated to the bottom plate 212, thereby improving structural strength of the bottom plate 212, so that the bottom plate 212 may better support the battery cell 221 located in the shell 21. The overall center of gravity of the battery module 20 is lowered, so that the overall structure of the battery module 20 is more stable, and the battery module 20 may be more stably mounted to the load-bearing bracket 10.

In some embodiments, the heat management component 24 and the bottom plate 212 are integrally formed.

That the heat management component 24 and the bottom plate 212 are integrally formed means that the heat management component 24 and the bottom plate 212 are integrally formed as an integral structure, and there is no boundary line or interface between the heat management component 24 and the bottom plate 212.

For example, the heat management component 24 and the bottom plate 212 may be integrally cast and formed.

In the foregoing technical solution, the heat management component 24 and the bottom plate 212 of the battery module 20 are integrally formed. The quantity of parts can be reduced, a process of assembling the heat management component 24 and the bottom plate 212 can be omitted, and production efficiency can be improved.

In some embodiments, referring to FIG. 4 to FIG. 6, an outer wall of the shell 21 is provided with two pipe joints 241. The two pipe joints 241 communicate with the heat exchange channel. The pipe joint 241 and the heat management joint 60 are detachably connected through a first connection pipe, and/or the pipe joints 241 between the heat management components 24 are detachably connected through a second connection pipe.

When the heat exchange medium flows through a single battery module 20 for temperature regulation, the heat exchange medium flows into the heat exchange channel through one of the two pipe joints 241, and flows out from the other one of the two pipe joints 241 after flowing through the heat exchange channel.

It should be noted that the pipe joint 241 is detachably connected to the heat management joint 60 through the first connection pipe, to implement a detachable connection between the heat management component 24 and the heat management joint 60. The pipe joints 241 between the heat management components 24 are detachably connected through the second connection pipe, to implement a detachable connection between the heat management components 24. When at least a part of the heat management components 24 are connected in series, one end of the second connection pipe connects a pipe joint 241 (for example, the pipe joint 241 is used as a liquid inlet joint) of one of two adjacent heat management components 24 and the other end of the second connection pipe connects a pipe joint 241 (for example, the pipe joint 241 is used as a liquid outlet joint) of the other one of the two adjacent heat management components 24.

The detachable connection between the first connection pipe and the pipe joint 241, the detachable connection between the first connection pipe and the heat management joint 60, and the detachable connection between the second connection pipe and the pipe joint 241 may all be plugging connections.

In the foregoing technical solution, the outer wall of the shell 21 is provided with the pipe joints 241 communicating with the heat exchange channel of the heat management component 24, thereby facilitating connection and separation between the heat management component 24 and the heat management joint 60 or facilitating connection and separation between the heat management components 24.

In some embodiments, two pipe joints 241 of a same battery module 20 are located on a same side of the battery module 20.

That two pipe joints 241 of a same battery module 20 are located on a same side of the battery module 20 means that two pipe joints 241 of a same battery module 20 are located on a same side of the battery module 20 in a horizontal direction. For example, two pipe joints 241 of a same battery module 20 may be located on a side of the battery module 20 in a length direction.

In the foregoing technical solutions, the pipe joints 241 of the same battery module 20 are disposed on the same side, to facilitate connection or separation between the heat management component 24 of the battery module 20 and the heat management component 24 or the heat management joint 60 of another battery module 20.

In some embodiments, referring to FIG. 1 to FIG. 3, the plurality of battery modules 20 are arranged in one or more layer in an up-down direction.

The plurality of battery modules 20 may be arranged in one layer in an up-down direction, or the plurality of battery modules 20 may be arranged in a plurality of layers in the up-down direction. Each layer may include at least one battery module 20.

In the foregoing technical solution, the plurality of battery modules 20 are arranged in one or more layers in the up-down direction, so that the battery modules 20 may be arranged compactly, which is beneficial to improving the energy density of the battery 100.

In some embodiments, the plurality of battery modules 20 are arranged in two or three layers in the up-down direction.

The plurality of battery modules 20 may be arranged in two layers in the up-down direction, or the plurality of battery modules 20 may be arranged in three layers in the up-down direction.

In the foregoing technical solution, the plurality of battery modules 20 are arranged in the two layers or three layers in the up-down direction. In this way, the arrangement of the battery modules 20 may be compact to be beneficial to improving the energy density of the battery 100, an entire height of the battery 100 is not excessively large, and a use scenario of the battery 100 is not affected, so that the height of the battery 100 is suitable, thereby reducing limitations to the use scenario of the battery 100.

In some embodiments, referring to FIG. 1 to FIG. 4, the battery includes: a distribution box 50. The distribution box 50 is disposed on the load-bearing bracket 10. At least a part of the battery modules 20 have first interfaces 23. The distribution box 50 has second interfaces 51. The first interfaces 23 and the second interfaces 51 are connected through connection wiring harnesses. The first interfaces 23 of the battery modules 20 in a same layer are located on a same side.

The at least the part of the battery modules 20 have the first interfaces 23. To be specific, a part of the battery modules 20 may have first interfaces 23. Alternatively, each of the battery modules 20 may have a first interface 23. For example, when the battery module 20 includes the foregoing first battery module 30 and second battery module 40, the first battery module 30 has the first interface 23, and the second battery module 40 is not provided with the first interface 23.

That the first interfaces 23 of the battery modules 20 in a same layer are located on a same side means that the first interfaces 23 of the battery modules 20 in a same layer are located on a same side in a horizontal direction. For example, the first interface 23 of each battery module 20 is located on a side of the battery module 20 in a length direction of the battery module 20, the length directions of all the battery modules 20 in a same layer are the same, and the first interfaces 23 of all the battery modules 20 in a same layer are located on a same side of the length direction of the battery modules 20.

In the foregoing technical solutions, the interfaces of the battery modules 20 in the same layer are disposed on the same side, so as to facilitate an operation of electrically connecting or separating the battery modules 20 in the same layer to/from the distribution box 50, thereby improving efficiency of an electrical connection and a separation operation between the battery modules 20 in the same layer and the distribution box 50.

In some embodiments, referring to FIG. 1 to FIG. 3, the plurality of battery modules 20 are arranged in a plurality of layers in the up-down direction. Each layer includes a plurality of battery modules 20. Arrangement directions of at least two layers of battery modules 20 are different. Length extension directions of the at least two layers of battery modules 20 are different.

The arrangement directions of at least two layers of battery modules 20 are different may be that arrangement directions of two adjacent layers of battery modules 20 are different. Different arrangement directions means that there are angles between the arrangement directions. For example, the arrangement directions may be perpendicular.

The length extension directions of at least two layers of battery modules 20 are different may be that length extension directions of two adjacent layers of battery modules 20 are different. Different length extension directions means that there are angles between the length extension directions. For example, the length extension directions may be perpendicular.

In the foregoing technical solution, the plurality of battery modules 20 are arranged in the plurality of layers in the up-down direction, so that the battery modules 20 may be arranged compactly, which is beneficial to improving the energy density of the battery 100. In addition, the arrangement directions of at least two layers of battery modules 20 are different, and the length extension directions of the at least two layers of battery modules 20 are different, so that the arrangement of the battery modules 20 is more compact, and the whole is more balanced. Thus, the entire battery 100 has higher structural strength, and the entire structure is more stable and reliable.

In some embodiments, referring to FIG. 1 to FIG. 3, one layer of battery modules 20 in two adjacent layers of battery modules 20 are arranged in a first direction (referring to direction e1 in the accompanying drawing) and a length direction of the battery modules 20 extends in a second direction (referring to direction e2 in the accompanying drawing). The other layer of battery modules 20 in the two adjacent layers of battery modules 20 are arranged in a second direction and a length direction of the battery modules 20 extends in the first direction. The first direction and the second direction are perpendicular to each other and are parallel to a horizontal direction.

An arrangement direction of each layer of battery modules 20 is perpendicular to a length extension direction of the layer of battery modules 20. Arrangement directions of two adjacent layers of battery modules 20 are perpendicular, and length directions of two adjacent layers of battery modules 20 are perpendicular.

In the foregoing technical solution, the arrangement directions of the two adjacent layers of battery modules 20 are perpendicular to each other and the extension directions of the two adjacent layers of battery modules 20 are perpendicular to each other, so that the two adjacent layers of battery modules 20 may be arranged in a cross manner, thereby further improving the structural strength of the entire battery 100. The entire structure is more stable and reliable.

In some embodiments, referring to FIG. 1 to FIG. 3, the battery includes: a distribution box 50. The distribution box 50 is disposed on the load-bearing bracket 10. The plurality of battery modules 20 are arranged in a plurality of layers in the up-down direction. The distribution box 50 and the topmost battery modules 20 are located in a same layer.

In the foregoing technical solution, the plurality of battery modules 20 are arranged in the plurality of layers in the up-down direction, so that the battery modules 20 may be arranged compactly, which is beneficial to improving the energy density of the battery 100. In addition, the distribution box 50 and the topmost battery modules 20 are located in the same layer, so that the distribution box 50 is not blocked by the battery modules 20 and an electrical connection between the distribution box 50 and other components outside the battery 100 is not affected, thereby facilitating implementation of the electrical connection between the distribution box 50 and other components outside the battery 100.

In some embodiments, referring to FIG. 1 to FIG. 3, the distribution box 50 is located in the middle of an arrangement direction of the topmost battery modules 20.

The topmost battery modules 20 are relative to the plurality of layers of battery modules 20 arranged in the up-down direction. The topmost battery modules 20 refer to battery module 20 in the highest layer in the plurality of layers of battery modules 20 arranged in the up-down direction.

In the foregoing technical solution, the distribution box 50 is located in the middle of the arrangement direction of the battery modules 20. In this way, structural layouts of opposite sides of the distribution box 50 in the arrangement direction of the topmost battery modules 20 are balanced, so that an entire structure of the battery 100 is balanced and stable. When the battery 100 is applied to a power consuming device 200, impact of vibration impact or load-bearing deformation on the distribution box 50 can be reduced.

In some embodiments, referring to FIG. 1 to FIG. 3, the plurality of battery modules 20 include a first battery module 30 and a second battery module 40, and a quantity of the first battery module 30 is at least one and a quantity of the second battery module 40 is one. The second battery module 40 is located in a topmost layer and is located in the middle of the arrangement direction of the topmost battery modules 20. The distribution box 50 and the second battery module 40 are integrated.

In the foregoing technical solution, the distribution box 50 and the topmost second battery module 40 are integrated, thereby realizing a compact structure, reducing the occupied space, and improving the overall energy density of the battery 100. In addition, because the second battery module 40 is located in a topmost layer and is located in the middle of the arrangement direction of the topmost battery modules 20, that the distribution box 50 is disposed in the topmost layer may be implemented, so that the distribution box 50 is not blocked by the battery modules 20 and an electrical connection between the distribution box 50 and other components outside the battery 100 is not affected, thereby facilitating implementation of the electrical connection between the distribution box 50 and other components outside the battery 100. In addition, the distribution box 50 is located in the middle of an arrangement direction of the topmost battery modules 20. In this way, structural layouts of opposite sides of the distribution box 50 in the arrangement direction of the topmost battery modules 20 are balanced, so that an entire structure of the battery 100 is balanced and stable. When the battery 100 is applied to a power consuming device 200, impact of vibration impact or load-bearing deformation on the distribution box 50 can be reduced.

In some embodiments, referring to FIG. 1 to FIG. 3, the plurality of battery modules 20 are arranged in two layers in the up-down direction. The plurality of battery modules 20 in a lower layer are all the first battery modules 30. The battery modules 20 in the lower layer include the first battery module 30 and the second battery module 40. The first battery module 30 has a first interface 23. The distribution box 50 has a second interface 51. The first interface 23 and the second interface 51 are connected through a connection wiring harness. The first interfaces 23 of the battery modules 20 in a same layer are located on a same side. The second interface 51 and the first interface 23 of the first battery module 30 in the upper layer are located on a same side.

When the plurality of battery modules 20 are arranged in two layers in an up-down direction, a higher position is an upper layer, and a lower position is a lower layer.

That the second interface 51 and the first interface 23 of the first battery module 30 in the upper layer are located on a same side means that the second interface 51 and the first interface 23 of the first battery module 30 in the upper layer are located on a same side in a horizontal direction. For example, the second interface 51 is located on a side of the second battery module 40 in a length direction of the second battery module 40. The first interface 23 of the first battery module 30 in the upper layer is located on a side of the first battery module 30 in a length direction. The length directions of the first battery module 30 in the upper layer and the second battery module 40 are consistent. The first interface 23 of the first battery module 30 in the upper layer and the second interface 51 on the second battery module 40 are located on a same side in the length direction.

In the foregoing technical solution, the plurality of battery modules 20 are arranged in the two layers in the up-down direction. In this way, the arrangement of the battery modules 20 may be compact to be beneficial to improving the energy density of the battery 100, an entire height of the battery 100 is not excessively large, and a use scenario of the battery 100 is not affected, so that the height of the battery 100 is suitable, thereby reducing limitations to the use scenario of the battery 100. In addition, a manner of providing interfaces on the first battery module 30 and the distribution box 50 further facilitates connection and separation between the battery module 20 and the distribution box 50. In addition, the interfaces of the battery modules 20 in the same layer are disposed on the same side, so as to facilitate an operation of electrically connecting or separating the battery modules 20 in the same layer to/from the distribution box 50, thereby improving efficiency of an electrical connection and a separation operation between the battery modules 20 in the same layer and the distribution box 50. In addition, the second interface 51 of the distribution box 50 and the first interfaces 23 of the first battery modules 30 in an upper layer are located on a same side, thereby facilitating an electrical connection between the first battery modules 30 in the same layer and the distribution box 50, and reducing a length of the connection wiring harness.

In some embodiments, referring to FIG. 1 to FIG. 4, the battery includes: a heat management system. The heat management system includes a plurality of heat management components 24. The heat management component 24 is disposed on the battery module 20 to regulate a temperature of the battery module 20. The heat management component 24 has a heat exchange channel through which a heat exchange medium flows. The battery module 20 is provided with two pipe joints 241 communicating with the heat exchange channel. The pipe joints 241 of the battery modules 20 in a same layer are located on a same side.

The quantity of the heat management components 24 may be the same as the quantity of the battery modules 20, and the heat management components are in a one-to-one correspondence with the battery modules.

That the pipe joints 241 of the battery modules 20 in a same layer are located on a same side means that two pipe joints 241 of the battery modules 20 in a same layer are located on a same side in a horizontal direction. For example, battery modules 20 in a same layer have a same length direction, and two pipe joints 241 of the battery modules 20 in the same layer are located on a same side of the battery modules 20 in the length direction.

In the foregoing technical solution, the heat management system including the plurality of heat management components 24 is disposed. A temperature of each battery module 20 may be regulated, so that the battery module 20 has an independent heat management component 24, thereby improving efficiency of temperature regulation of the battery cell 221 of the battery module 20 by the heat management component 24, and facilitating maintenance for the battery module 20. In addition, the two pipe joints 241 of the battery modules 20 in the same layer are located on the same side, thereby facilitating connection and separation between the heat management components 24 of the battery modules 20 in the same layer and between the heat management component 24 of the battery module 20 and the heat management joint 60, and reducing a length of a connection pipe between the heat management components 24 of the battery modules 20 in the same layer.

In some embodiments, referring to FIG. 1 to FIG. 4, the battery includes: a heat management system. The heat management system includes a plurality of heat management components 24. The heat management component 24 is disposed on the battery module 20 to regulate a temperature of the battery module 20. The heat management component 24 has a heat exchange channel through which a heat exchange medium flows. The heat management system further includes a heat management joint 60. The heat management joint 60 is disposed on the load-bearing bracket 10. At least a part of the heat management components 24 are connected to the heat management joint 60. The plurality of battery modules 20 are arranged in a plurality of layers in the up-down direction. The heat management joint 60 and the topmost battery modules 20 are located in a same layer.

The quantity of the heat management components 24 may be the same as the quantity of the battery modules 20, and the heat management components are in a one-to-one correspondence with the battery modules.

That at least a part of the heat management components 24 are connected to the heat management joint 60 may be that a part of the heat management components 24 are connected to the heat management joint 60, or each heat management component 24 is connected to the heat management joint 60. For example, when a part of the heat management components 24 are connected in series, the part of the heat management components 24 are connected to the heat management joint 60. For another example, when all the heat management components 24 are connected in parallel, each heat management component 24 is connected to the heat management joint 60.

In the foregoing technical solution, the heat management system including the plurality of heat management components 24 is disposed. A temperature of each battery module 20 may be regulated. In addition, the heat management component 24 is disposed in the shell 21 of the battery module 20, so that the battery module 20 has an independent heat management component 24, thereby improving efficiency of temperature regulation of the battery cell 221 of the battery module 20 by the heat management component 24, and facilitating maintenance for the battery module 20. In addition, the heat management joint 60 and the topmost battery modules 20 are located in the same layer, so that the heat management joint 60 is not blocked by the battery modules 20 and connection between the heat management joint 60 and other components outside the battery 100 is not affected, thereby facilitating the connection between the heat management joint 60 and other components outside the battery 100.

In some embodiments, referring to FIG. 1 to FIG. 3, the load-bearing bracket 10 includes a lower frame 11 and a plurality of supporting baffles 12. The plurality of supporting baffles 12 are disposed on the lower frame 11 and the plurality of supporting baffles 12 are spaced apart in the first direction. At least a part of the battery modules 20 are located between two adjacent supporting baffles 12. At least a part of the supporting baffles 12 are detachably connected to the lower frame 11.

The lower frame 11 may be a bracket structure having a hollow structure, and an upper side of the lower frame 11 may be open.

That at least a part of the battery modules 20 are located between two adjacent supporting baffles 12 may be that a part of the battery modules 20 are located between two adjacent supporting baffle 12, or all the battery modules 20 are located between two adjacent supporting baffle 12.

That at least a part of the supporting baffles 12 are detachably connected to the lower frame 11 may be that a part of the supporting baffles 12 are detachably connected to the lower frame 11, or each supporting baffle 12 is detachably connected to the lower frame 11.

When the battery 100 is assembled, at least a part of the battery modules 20 may be first placed in the lower frame 11, and then the detachable supporting baffles 12 are mounted to the lower frame 11. In this way, compared with mounting the detachable supporting baffles 12 first and then mounting the battery modules 20, a spacing between the detachable supporting baffles 12 and the battery modules 20 may be very small, or the supporting baffles 12 and the bottom structure of the battery modules 20 may be partially disposed in an overlapping manner. In this way, the battery modules 20 are more compactly arranged, and the battery modules 20 are conveniently mounted.

In the foregoing technical solution, the load-bearing bracket 10 includes the lower frame 11 and the plurality of supporting baffles 12. The lower frame 11 may support the battery module 20, and the plurality of supporting baffles 12 may space adjacent battery modules 20, or may limit the battery modules 20, so that the entire load-bearing bracket 10 has high structural strength. In addition, at least a part of the supporting baffles 12 are detachably connected to the lower frame 11, thereby facilitating assembly and disassembly of the battery module 20, realizing a more compact structure, reducing space waste, improving space utilization, and facilitating improving the energy density of the battery 100.

In some embodiments, referring to FIG. 1 to FIG. 3, the plurality of battery modules 20 are arranged in two layers in the up-down direction. Each layer includes a plurality of battery modules 20. The battery modules 20 in a lower layer are located between two adjacent supporting baffles 12. The plurality of battery modules 20 in an upper layer are supported above the plurality of supporting baffles 12.

That the plurality of battery modules 20 in an upper layer are supported above the plurality of supporting baffles 12 may be that the plurality of battery modules 20 in an upper layer are directly supported above the plurality of supporting baffles 12. At this moment, bottom surfaces of the plurality of battery modules 20 are directly in abutting contact with upper surfaces of the supporting baffles 12. Alternatively, the plurality of battery modules 20 in an upper layer may be indirectly supported above the plurality of supporting baffles 12. At this moment, another support structure may be disposed between the bottom surfaces of the plurality of battery modules 20 and the upper surfaces of the supporting baffles 12, to further improve the overall structural strength of the load-bearing bracket 10.

The supporting baffles 12 may increase the structural strength of the lower frame 11, and may further support the battery modules 20 in the upper layer.

In the foregoing technical solution, the plurality of battery modules 20 are arranged in the two layers in the up-down direction. In this way, the arrangement of the battery modules 20 may be compact to be beneficial to improving the energy density of the battery 100, an entire height of the battery 100 is not excessively large, and a use scenario of the battery 100 is not affected, so that the height of the battery 100 is suitable, thereby reducing limitations to the use scenario of the battery 100. The plurality of supporting baffles 12 may have a spacing function for adjacent battery modules 20 in a lower layer, or may have a position-limiting function for the battery modules 20 in the lower layer. In addition, because the battery modules 20 in an upper layer are supported on the plurality of supporting baffles 12, the plurality of supporting baffles 12 may support the battery modules 20 in the upper layer, and the load of the battery modules 20 in the upper layer may be transferred to the lower frame 11 through the plurality of supporting baffles 12, thereby reducing the impact on the battery modules 20 in the upper layer, also reducing the impact on the battery modules 20 in a lower layer, and facilitating prolonging the service life of the battery modules 20.

In some embodiments, referring to FIG. 1 to FIG. 3, the plurality of supporting baffles 12 include first supporting baffles 13 and second supporting baffles 14 alternately arranged in the first direction. The first supporting baffles 13 are detachably connected to the lower frame 11.

That the plurality of supporting baffles 12 include first supporting baffles 13 and second supporting baffles 14 alternately arranged in the first direction means that one of two adjacent supporting baffles 12 is a first supporting baffle 13 and the other one is a second supporting baffle 14.

In the foregoing technical solution, a part of the plurality of supporting baffles 12 are detachable, thereby further facilitating assembly and disassembly of the battery modules 20, realizing a more compact structure, reducing space waste, improving space utilization, and facilitating improving the energy density of the battery 100.

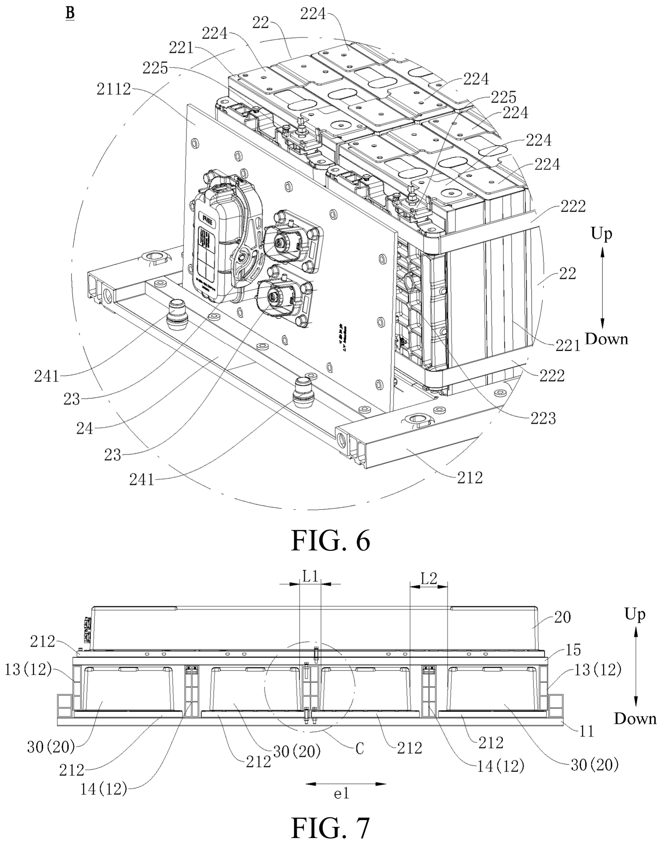

In some embodiments, referring to FIG. 7, a spacing between the battery modules 20 on opposite sides of the first supporting baffle 13 is a first spacing L1. A spacing between the battery modules 20 on opposite sides of the second supporting baffle 14 is a second spacing L2. The first spacing L1 is less than the second spacing L2.

The battery modules 20 on opposite sides of the first supporting baffle 13 refer to battery modules 20 on opposite sides of the first supporting baffle 13 in a thickness direction.

The battery modules 20 on opposite sides of the second supporting baffle 14 refer to battery modules 20 on opposite sides of the second supporting baffle 14 in a thickness direction.

The spacings between the battery modules 20 on opposite sides of the first supporting baffle 13 are not the same in size in an up-down direction. For example, the spacings between the battery modules 20 on opposite sides of the first supporting baffle 13 are increased in a down-to-up direction. The spacings between the battery modules 20 on opposite sides of the second supporting baffle 14 are not the same in size in an up-down direction. For example, the spacings between the battery modules 20 on opposite sides of the second supporting baffle 14 are increased in a down-to-up direction. At this moment, comparison between the first spacing and the second spacing refers to comparison at a same height. That the first spacing L1 is less than the second spacing L2 means that the first spacing is less than the second spacing at the same height.

In the foregoing technical solution, detachable characteristics of the first supporting baffle 13 may be used, so that the spacing between the battery modules 20 on the opposite sides of the first supporting baffle 13 is relatively small, thereby realizing a more compact structure, reducing space waste, improving space utilization, and facilitating improving the energy density of the battery 100.

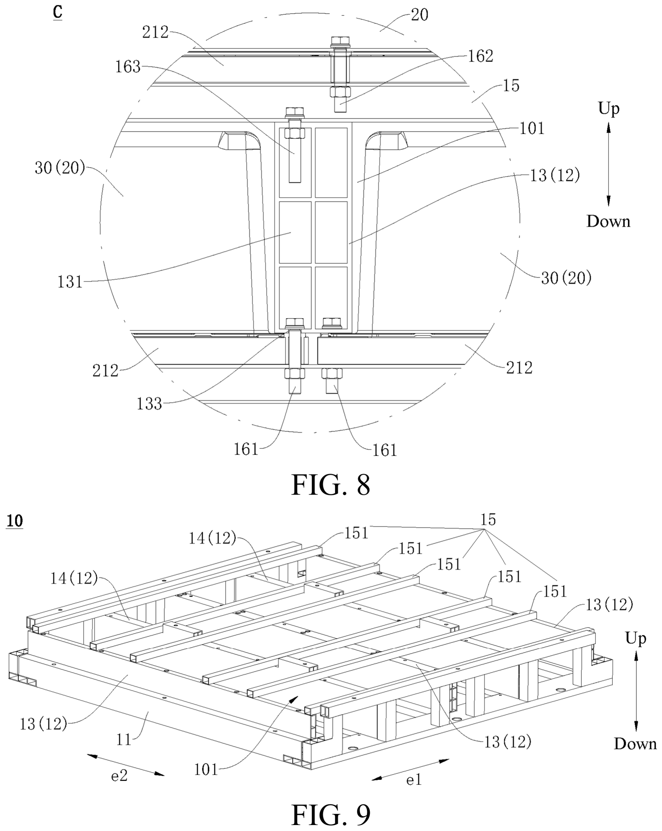

In some embodiments, referring to FIG. 7 and FIG. 8, the battery module 20 includes a shell 21 and a battery cell 221 disposed in the shell 21. The shell 21 includes a bottom plate 212 and a case 211. The case 211 is connected to an upper side of the bottom plate 212. An accommodating cavity 201 for accommodating the battery cell 221 is defined between the case 211 and the bottom plate 212. A bottom surface of the first supporting baffle 13 is supported on the bottom plate 212 of two adjacent battery modules 20 in a lower layer, and the first supporting baffle 13 is connected to the bottom plate 212. The bottom plate 212 is connected to the lower frame 11. A bottom surface of the second supporting baffle 14 is supported on and connected to the lower frame 11.

That the first supporting baffle 13 is connected to the bottom plate 212 may be that the first supporting baffle 13 is detachably connected to the bottom plate 212. That the bottom plate 212 is connected to the lower frame 11 may be that the bottom plate 212 is detachably connected to the lower frame 11.

Optionally, the second supporting baffle 14 may be integrally formed with the lower frame 11, or the second supporting baffle 14 may be in welded connection with the lower frame 11.

In the foregoing technical solution, the battery module 20 may be sealed by the shell 21 thereof, and the battery module 20 is supported by the bottom plate 212 thereof and is connected to the load-bearing bracket 10. The battery module 20 may be stably supported by the load-bearing bracket 10. In addition, the bottom surface of the first supporting baffle 13 is supported on the bottom plate 212 of two adjacent battery modules 20 in a lower layer, so that the first supporting baffle 13 partially overlaps the bottom plate 212 of the battery modules 20, thereby fully using space, reducing space waste, realizing a more compact structure, and facilitating improving the energy density of the battery 100. In addition, the first supporting baffle 13 is connected to the bottom plate 212 of the battery modules 20 in the lower layer, so that the entire structural strength can be higher, and the stability can be better.

In some embodiments, a first fastener 161 is penetrated through the first supporting baffle 13, the bottom plate 212, and the lower frame 11, to mount the battery module 20 in a lower layer and the first supporting baffle 13 to the lower frame 11.

The first fastener 161 may be a threaded fastener, or the first fastener 161 may be a bolt.

In the foregoing technical solution, the first fastener 161 is penetrated through the first supporting baffle 13, the bottom plate 212, and the lower frame 11, so as to implement a detachable connection between the battery module 20 in a lower layer and the load-bearing bracket 10. In addition, a connection manner by using the fastener implements the connection between the battery module 20 and the lower frame 11, so as to ensure mounting stability and reliability of the battery module 20 in the lower layer, and further facilitating disassembling of the battery module 20 in the lower layer. In addition, the first supporting baffle 13 and the bottom plate 212 share the first fastener 161, so that the first supporting baffle 13 and the battery module 20 in the lower layer are mounted and fastened to the lower frame 11, thereby reducing the quantity of fasteners and improving the disassembling efficiency.

In some embodiments, referring to FIG. 7 and FIG. 8, a hollow cavity 131 is formed in the first supporting baffle 13. An avoidance hole 132 communicating with the hollow cavity 131 is formed at the top of the first supporting baffle 13. A connection hole 133 is formed at the bottom of the first supporting baffle 13. The connection hole 133 and the avoidance hole 132 are opposite in the up-down direction. The first fastener 161 is suitable for passing through the avoidance hole 132 and the hollow cavity 131 and being penetrated downward through the connection hole 133, the bottom plate 212, and the lower frame 11.

In a process of mounting and fastening the first supporting baffle 13 and a part of the battery modules 20 in the lower layer to the lower frame 11 through the first fastener 161, the first fastener 161 may extend downward through the avoidance hole 132 and into the hollow cavity 131, then extend into the connection hole 133 at the bottom of the first supporting baffle 13 through the hollow cavity 131, and be penetrated downward through the bottom plate 212 and the lower frame 11. A lower end of the first fastener 161 may extend downward out of the bottom surface of the lower frame 11. When the first fastener 161 is a bolt, it is convenient to mount a nut to fit the first fastener 161, so as to tighten the first fastener 161 to the lower frame 11.

In the foregoing technical solution, the first supporting baffle 13 is of a hollow structure, so that materials can be reduced and weight can be reduced while ensuring the structural strength of the first supporting baffle 13. In addition, the avoidance hole 132 is provided at the top of the first supporting baffle 13, so that the first fastener 161 can be pushed downward through the avoidance hole 132 and the hollow cavity 131, to connect the first supporting baffle 13, the bottom plate 212, and the lower frame 11.

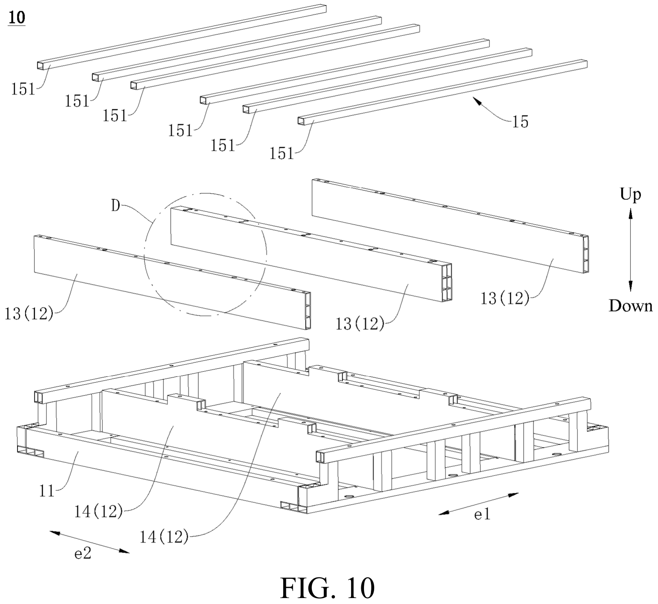

In some embodiments, referring to FIG. 9 to FIG. 11, the load-bearing bracket 10 includes an upper bracket 15. The upper bracket 15 is supported on upper surfaces of the plurality of supporting baffles 12, and the upper bracket 15 is connected to the plurality of supporting baffles 12. The battery module 20 in an upper layer is supported on the upper bracket 15, and the battery module 20 in the upper layer is connected to the upper bracket 15.

The upper bracket 15 may be a bracket of an integral structure. When the upper bracket 15 is a bracket of an integral structure, the upper bracket 15 may be a bracket having a hollow structure, and the upper bracket 15 may be generally a plate-shaped bracket having a hollow structure.

The upper bracket 15 may alternatively be a separate structure including a plurality of sub-brackets 151 spaced apart. The sub-bracket 151 may be strip-shaped. The plurality of sub-brackets 151 may be arranged in a direction perpendicular to a direction in which the plurality of supporting baffles 12 are arranged. For example, the plurality of supporting baffles 12 may be arranged in a first direction. The plurality of sub-brackets 151 may be arranged in a second direction. The second direction is perpendicular to the first direction. Each sub-bracket 151 may be connected to all the supporting baffles 12.

The connection between the battery module 20 in the upper layer and the upper bracket 15 may be a detachable connection.

In the foregoing technical solution, the upper bracket 15 for supporting and fastening the battery module 20 in the upper layer is disposed, thereby facilitating mounting and fastening of the battery module 20 in the upper layer, and improving the structural strength of the load-bearing bracket 10.

In some embodiments, the battery module 20 includes a shell 21 and a battery cell 221 disposed in the shell 21. The shell 21 includes a bottom plate 212 and a case 211. The case 211 is connected to an upper side of the bottom plate 212. An accommodating cavity 201 for accommodating the battery cell 221 is defined between the case 211 and the bottom plate 212. A second fastener 162 is suitable for being penetrated between the bottom plate 212 and the upper bracket 15, to mount the battery module 20 in an upper layer to the upper bracket 15.

The second fastener 162 may be a threaded fastener. For example, the second fastener 162 may be a screw.

In the foregoing technical solution, the second fastener 162 is penetrated between the bottom plate 212 and the upper bracket 15, so as to implement a detachable connection between the battery module 20 in the upper layer and the load-bearing bracket 10. In addition, a connection manner by using the fastener implements the detachable connection between the battery module 20 and the upper bracket 15, so as to ensure mounting stability and reliability of the battery module 20 in the upper layer, and further facilitating disassembling of the battery module 20 in the upper layer.

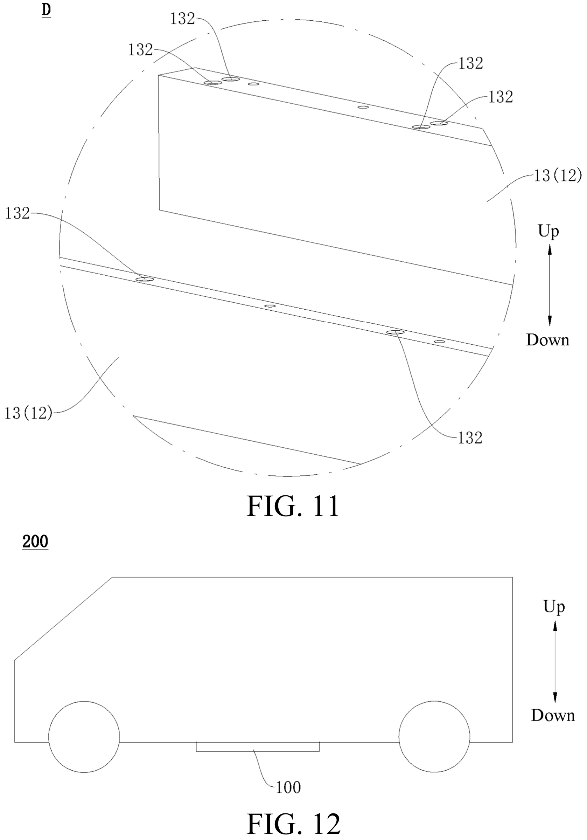

Referring to FIG. 12, an embodiment of this application further provides a power consuming device, including the foregoing battery 100. The battery 100 is configured to provide electric energy for the power consuming device. Therefore, by using the foregoing battery 100, maintenance difficulty and maintenance costs of the battery 100 can be reduced.

Optionally, as shown in FIG. 12, when the battery 100 is applicable to a vehicle, the battery 100 may be disposed at the bottom, head, or tail of the vehicle. The battery 100 may be configured to supply power to the vehicle. For example, the battery 100 may be used as a power supply for operating the vehicle. The vehicle may further include a controller and a motor. The controller is configured to control the battery 100 to supply power to the motor, for example, to meet working power requirements during starting, navigation, and traveling of the vehicle.

A battery 100 according to an embodiment of this application is described below with reference to FIG. 1 to FIG. 11.

Referring to FIG. 1 to FIG. 3, in this embodiment, the battery includes a load-bearing bracket 10, a plurality of battery modules 20, a distribution box 50, and a heat management system.

The load-bearing bracket 10 includes a lower frame 11, a plurality of supporting baffles 12, and an upper bracket 15. The plurality of supporting baffles 12 are disposed in the lower frame 11 and spaced apart in a first direction. Each supporting baffle 12 extends in a second direction. The plurality of supporting baffles 12 include first supporting baffles 13 and second supporting baffles 14 alternately arranged in the first direction. The first supporting baffles 13 are detachably connected to the lower frame 11. The upper bracket 15 is disposed above the plurality of supporting baffles 12 and is connected to the plurality of supporting baffles 12. The upper bracket 15 includes a plurality of sub-brackets 151 spaced apart in the second direction. Each sub-bracket 151 extends in the first direction. The sub-bracket 151 is connected to each supporting baffle 12. The sub-bracket 151 may be connected to each supporting baffle 12 through a third fastener 163.

The plurality of battery modules 20 are arranged in two layers in an up-down direction. Each layer includes a plurality of battery modules 20. There may be four battery modules 20 in a lower layer, and there may be three battery modules 20 in an upper layer. The battery modules 20 in the lower layer are arranged in the first direction. A length direction of the battery modules 20 in the lower layer extends in the second direction. The battery modules 20 in the lower layer are all first battery modules 30. The plurality of battery modules 20 in the upper layer are arranged in the second direction. A length direction of the battery modules 20 in the upper layer extends in the first direction. The plurality of battery modules 20 in the upper layer include a plurality of first battery modules 30 and one second battery module 40. The second battery module 40 is located in the middle of the plurality of battery modules 20 in the upper layer in the second direction.

The battery module 20 in the lower layer is located between two adjacent supporting baffles 12. The second supporting baffle 14 is located between two adjacent battery modules 20 in the lower layer. The second supporting baffle 14 is in welded connection with the lower frame 11 or the second supporting baffle 14 is integrally formed with the lower frame 11. The battery module 20 includes a bottom plate 212. A bottom surface of the first supporting baffle 13 is supported on the bottom plate 212 of the battery module 20 in the lower layer. A first fastener 161 is penetrated through the first supporting baffle 13, the bottom plate 212, and the lower frame 11, to mount the battery module 20 in the lower layer and the first supporting baffle 13 to the lower frame 11.

The plurality of battery modules 20 in the upper layer are supported on the upper bracket 15. Every two adjacent sub-brackets 151 jointly support a battery module 20 in an upper layer. The battery module 20 in the upper layer is connected to the upper bracket 15. A second fastener 162 is penetrated through the bottom plate 212 and the sub-brackets 151, to mount and fasten the battery module 20 in the upper layer to the upper bracket 15.

The distribution box 50 and the second battery module 40 are integrated. The distribution box 50 includes a box and an electrical assembly disposed in the box. A part of the shell 21 of the second battery module 40 constitutes the box of the distribution box 50. The first battery module 30 is provided with a first interface 23. The second battery module 40 is provided with a second interface 51 and a butt connector 52. The butt connector 52 is disposed at the top of the second battery module 40. The butt connector 52 has a butt interface 521. The butt interface 521 faces upward. When the battery 100 is applied to the power consuming device 200, the butt connector 52 is configured to implement an electrical connection to the power consuming device 200, so that the battery 100 supplies power to the power consuming device 200.

Each battery module 20 includes a shell 21 and a plurality of battery cells 221 disposed in the shell 21. The shell 21 includes a bottom plate 212 and a case 211. The case 211 is connected to an upper side of the bottom plate 212 and defines an accommodating cavity 201 with the bottom plate 212. The plurality of battery cells 221 are disposed in the accommodating cavity 201. The case 211 further includes an end cover 2112. The end cover 2112 is located on a side of the case 211 in a length direction. The end cover 2112 is provided with the first interface 23 or the second interface 51. When the battery module 20 is the first battery module 30, the end cover 2112 of the first battery module 30 is provided with the first interface 23. When the battery module 20 is the second battery module 40, the end cover 2112 of the second battery module 40 is provided with the second interface 51.

The first interfaces 23 of the first battery modules 30 in the lower layer are located on a same side in the second direction. The first interface 23 of the first battery module 30 in the upper layer and the second interface 51 of the second battery module 40 are located on a same side in the first direction.

The plurality of battery cells 221 are divided into a plurality of (for example, four) battery groups 22. Each battery group 22 includes a plurality of battery cells 221 arranged in parallel. An arrangement direction of the plurality of battery cells 221 of each battery group 22 is consistent with a length direction of the battery module 20. Opposite sides of each battery group 22 in the length direction of the corresponding battery module 20 are provided with end plates 223. Electrical connectors 225 are provided on the end plates 223. The battery cells 221 of each battery group 22 are connected to each other through an electrical connection plate 224 to implement series connection. A belt 222 is disposed around an outer peripheral side of each battery group 22, to bind all the battery cells 221 and the end plates 223 of each battery group 22 together. The electrical connector 225 on the end plate 223 of each battery group 22 is used as a bus portion of each battery group 22. For the first battery module 30, the electrical connectors 225 on the end plates 223 of at least a part of the battery groups 22 are electrically connected to the first interface 23 of the first battery module 30. The electrical connectors 225 of a part of the battery groups 22 may alternatively be connected to each other. For the second battery module 40, the electrical connector 225 on the end plate 223 of the battery group 22 may be directly electrically connected to the electrical assembly of the distribution box 50 inside the shell 21.

The heat management system includes a heat management joint 60 and a plurality of heat management components 24. The quantity of the heat management components 24 is the same as the quantity of the battery modules 20, and the heat management components are in a one-to-one correspondence with the battery modules. The heat management joint 60 is disposed at the top of the first supporting baffle 13 close to an outer edge. The heat management joint 60 may be located on a side of the second battery module 40 in the first direction. The heat management joint 60 and the second interface 51 may be located on a same side of the second battery module 40 in the first direction.

Each heat management component 24 is integrated to the bottom plate 212 of the corresponding battery module 20. Each heat management component 24 has a heat exchange channel. The bottom plate 212 is provided with two pipe joints 241 spaced apart in a width direction of the bottom plate 212. The pipe joints 241 of the battery module 20 in the lower layer are located on a same side in the second direction. The pipe joints 241 of the battery module 20 in the upper layer are located on a same side in the first direction. The pipe joint 241 of the battery module 20 in the upper layer and the heat management joint 60 are located on a same side.

The first interface 23 and the pipe joint 241 of a single first battery module 30 are located on a same side in a length direction of the first battery module 30. The second interface 51 and the pipe joint 241 of the second battery module 40 are located on a same side in a length direction of the second battery module 40.

The load-bearing bracket 10 is further provided with a locking member 164. The locking member 164 is configured to mount and fasten the battery 100 to the power consuming device 200. There may be a plurality of locking members 164. A part of the locking members 164 may be disposed on the lower frame 11 and located at an outer edge of the lower frame 11. The plurality of locking members 164 at the outer edge of the lower frame 11 are spaced apart at the periphery of the lower frame 11. Other locking members 164 may be disposed at the top of the second supporting baffle 14. A plurality of locking members 164 spaced apart in an extension direction of the second supporting baffle 14 are disposed at the top of each second supporting baffle 14. The locking members 164 on the second supporting baffle 14 are located between two adjacent battery modules 20 in an upper layer.

In the descriptions of this specification, descriptions using reference terms "an embodiment", "some embodiments", "an exemplary embodiment", "an example", "a specific example", or "some examples" mean that specific characteristics, structures, materials, or features described with reference to this embodiment or example are included in at least one embodiment or example of this application. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of this application have been shown and described, a person of ordinary skill in the art may understand that various changes, modifications, replacements, and variations may be made to the embodiments without departing from the principles and spirit of this application, and the scope of this application is as defined by the appended claims and their equivalents.

## Claims

1. A battery, comprising:
a load-bearing bracket; and
a plurality of battery modules, the plurality of battery modules being mounted to the load-bearing bracket, and at least one battery module being detachably mounted to the load-bearing bracket.

2. The battery according to claim 1, wherein the battery module comprises a shell and at least one battery cell, the battery cell is disposed in the shell, and the shell is detachably connected to the load-bearing bracket.

3. The battery according to claim 2, wherein the shell comprises a bottom plate and a case, the case is connected to an upper side of the bottom plate and defines, with the bottom plate, an accommodating cavity for accommodating the battery cell, and the bottom plate is supported by the load-bearing bracket and is detachably connected to the load-bearing bracket.

4. The battery according to claim 3, wherein a projection of the case in a horizontal plane is a first projection, a projection of the bottom plate in the horizontal plane is a second projection, and the first projection is located within the second projection.

5. The battery according to claim 3, wherein a fastener is penetrated between the bottom plate and the load-bearing bracket, to mount the battery module to the load-bearing bracket.

6. The battery according to claim 3, wherein a lower edge of the case is formed with a connection flange, and the connection flange is detachably connected to the bottom plate.

7. The battery according to claim 1, comprising: a distribution box, the distribution box being disposed on the load-bearing bracket, and at least a part of the battery modules being detachably connected to the distribution box through a connection wiring harness.

8. The battery according to claim 7, wherein the at least the part of the battery modules have a first interface, the distribution box has a second interface, two ends of the connection wiring harness are respectively connected to the first interface and the second interface, and the connection wiring harness is detachably connected to at least one of the first interface and the second interface.

9. The battery according to claim 8, wherein the distribution box has a plurality of second interfaces, and all the second interfaces are located on a same side of the distribution box.

10. The battery according to claim 7, wherein the plurality of battery modules comprise a first battery module and a second battery module, a quantity of the first battery module is at least one and a quantity of the second battery module is one, the first battery module is detachably connected to the distribution box through the connection wiring harness, and the distribution box and the second battery module are integrated.

11. The battery according to claim 10, wherein the battery module comprises a shell and a battery cell disposed in the shell, the shell of the first battery module is provided with a first interface, the distribution box comprises a box and an electrical assembly disposed in the box, a shell of the second battery module forms the box and is provided with a second interface, the electrical assembly is electrically connected to the second interface, two ends of the connection wiring harness are respectively connected to the first interface and the second interface, the connection wiring harness is detachably connected to at least one of the first interface and the second interface, and the battery cell of the second battery module is electrically connected to the electrical assembly.

12. The battery according to claim 1, comprising: a heat management system, the heat management system comprising a plurality of heat management components, the battery module comprising a shell and a battery cell disposed in the shell, and the heat management component being disposed on the shell or in the shell to regulate a temperature of the battery cell.

13. The battery according to claim 12, wherein the heat management component has a heat exchange channel through which a heat exchange medium flows, the plurality of heat management components are connected in series, in parallel, or in a series-parallel mixed manner, the heat management system further comprises a heat management joint, the heat management joint is disposed on the load-bearing bracket and is located outside the battery module, and the heat management component is detachably connected to the heat management joint and/or the heat management components are detachably connected to each other.

14. The battery according to claim 13, wherein the heat management joint is close to an outer edge of the load-bearing bracket.

15. The battery according to claim 13, wherein the heat management component is integrated to the shell.

16. The battery according to claim 15, wherein the shell comprises a bottom plate and a case, the case is connected to an upper side of the bottom plate and defines, with the bottom plate, an accommodating cavity for accommodating the battery cell, the bottom plate is supported by the load-bearing bracket, and the heat management component is integrated to the bottom plate.

17. The battery according to claim 16, wherein the heat management component and the bottom plate are integrally formed.

18. The battery according to claim 13, wherein an outer wall of the shell is provided with two pipe joints communicating with the heat exchange channel, the pipe joint and the heat management joint are detachably connected through a first connection pipe, and/or the pipe joints between the heat management components are detachably connected through a second connection pipe.

19. The battery according to claim 18, wherein the two pipe joints of a same battery module are located on a same side of the battery module.

20. The battery according to any one of claims 1 to 19, wherein the plurality of battery modules are arranged in one or more layer in an up-down direction.

21. The battery according to claim 20, wherein the plurality of battery modules are arranged in two or three layers in the up-down direction.

22. The battery according to claim 20, comprising: the distribution box, the distribution box being disposed on the load-bearing bracket, the at least the part of the battery modules having the first interface, the distribution box having the second interface, the first interface and the second interface being connected through the connection wiring harness, and the first interface of the battery module in a same layer being located on a same side.

23. The battery according to claim 20, wherein the plurality of battery modules are arranged in a plurality of layers in the up-down direction, each layer comprises the plurality of battery modules, arrangement directions of at least two layers of battery modules are different, and length extension directions of the at least two layers of battery modules are different.

24. The battery according to claim 23, wherein one layer of battery modules in adjacent layers of battery modules are arranged in a first direction and a length direction of the battery modules extends in a second direction, the other layer of battery modules in the adjacent layers of battery modules are arranged in the second direction and a length direction of the battery modules extends in the first direction, and the first direction and the second direction are perpendicular to each other and are parallel to a horizontal direction.

25. The battery according to claim 20, comprising: the distribution box, the distribution box being disposed on the load-bearing bracket, the plurality of battery modules being arranged in a plurality of layers in the up-down direction, and the distribution box and topmost battery modules being located in a same layer.

26. The battery according to claim 25, wherein the distribution box is located in the middle of an arrangement direction of the topmost battery modules.

27. The battery according to claim 26, wherein the plurality of battery modules comprise the first battery module and the second battery module, the quantity of the first battery module is at least one and the quantity of the second battery module is one, the second battery module is located in a topmost layer and is located in the middle of the arrangement direction of the topmost battery modules, and the distribution box and the second battery module are integrated.

28. The battery according to claim 27, wherein the plurality of battery modules are arranged in two layers in the up-down direction, the plurality of battery modules in a lower layer are all the first battery modules, and the battery modules in an upper layer comprise the first battery module and the second battery module; and
the first battery module has the first interface, the distribution box has the second interface, the first interface and the second interface are connected through the connection wiring harness, the first interface of the battery module in a same layer are located on a same side, and the second interface and the first interface of the first battery module in the upper layer are located on a same side.

29. The battery according to claim 20, comprising: the heat management system, the heat management system comprising the plurality of heat management components, the heat management component being disposed on the battery module to regulate the temperature of the battery module, the heat management component having the heat exchange channel through which the heat exchange medium flows, the battery module being provided with the two pipe joints communicating with the heat exchange channel, and the pipe joints of the battery modules in a same layer being located on a same side.

30. The battery according to claim 20, comprising: the heat management system, the heat management system comprising the plurality of heat management components, the heat management component being disposed on the battery module to regulate the temperature of the battery module, and the heat management component having the heat exchange channel through which the heat exchange medium flows,
wherein the heat management system further comprises the heat management joint, the heat management joint is disposed on the load-bearing bracket, at least a part of the heat management components are connected to the heat management joint, the plurality of battery modules are arranged in a plurality of layers in the up-down direction, and the heat management joint and the topmost battery modules are located in a same layer.

31. The battery according to claim 20, wherein the load-bearing bracket comprises a lower frame and a plurality of supporting baffles, the plurality of supporting baffles are disposed on the lower frame and are spaced apart in the first direction, at least a part of the battery modules are located between two adjacent supporting baffles, and at least a part of the supporting baffles are detachably connected to the lower frame.

32. The battery according to claim 31, wherein the plurality of battery modules are arranged in two layers in the up-down direction, each layer comprises a plurality of battery modules, the battery modules in a lower layer are located between two adjacent supporting baffles, and the plurality of battery modules in an upper layer are supported above the plurality of supporting baffles.

33. The battery according to claim 32, wherein the plurality of supporting baffles comprise a first supporting baffle and a second supporting baffle alternately arranged in the first direction, and the first supporting baffle is detachably connected to the lower frame.

34. The battery according to claim 33, wherein a spacing between the battery modules on opposite sides of the first supporting baffle is a first spacing, a spacing between the battery modules on opposite sides of the second supporting baffle is a second spacing, and the first spacing is less than the second spacing.

35. The battery according to claim 33, wherein the battery module comprises the shell and the battery cell disposed in the shell, the shell comprises the bottom plate and the case, the case is connected to the upper side of the bottom plate and defines, with the bottom plate, the accommodating cavity for accommodating the battery cell, a bottom surface of the first supporting baffle is supported on the bottom plate of two adjacent battery modules in a lower layer and is connected to the bottom plate, the bottom plate is connected to the lower frame, and a bottom surface of the second supporting baffle is supported on and connected to the lower frame.

36. The battery according to claim 35, wherein a first fastener is penetrated through the first supporting baffle, the bottom plate, and the lower frame, to mount the battery module in a lower layer and the first supporting baffle to the lower frame.

37. The battery according to claim 36, wherein a hollow cavity is formed in the first supporting baffle, an avoidance hole communicating with the hollow cavity is formed at the top of the first supporting baffle, a connection hole is formed at the bottom of the first supporting baffle, the connection hole and the avoidance hole are opposite in the up-down direction, and the first fastener is suitable for passing through the avoidance hole and the hollow cavity and being penetrated downward through the connection hole, the bottom plate, and the lower frame.

38. The battery according to claim 32, wherein the load-bearing bracket comprises an upper bracket, the upper bracket is supported on upper surfaces of the plurality of supporting baffles and is connected to the plurality of supporting baffles, and the battery module in an upper layer is supported on the upper bracket and is connected to the upper bracket.

39. The battery according to claim 38, wherein the battery module comprises the shell and the battery cell disposed in the shell, the shell comprises the bottom plate and the case, the case is connected to the upper side of the bottom plate and defines, with the bottom plate, the accommodating cavity for accommodating the battery cell, and a second fastener is suitable for being penetrated between the bottom plate and the upper bracket, to mount the battery module in an upper layer to the upper bracket.

40. A power consuming device, comprising: the battery according to any one of claims 1 to 39.
